# EUROPEAN PATENT APPLICATION

(11) **EP 3 761 601 A1**
(43) Date of publication of application: **06.01.2021**
(21) Application number: 18913434.9
(22) Date of filing: 04.04.2018
(51) Int. Cl.: H04L 29/08

(54) **DATA TRANSMISSION METHOD, TERMINAL DEVICE, AND NETWORK DEVICE**

(71) Applicant: HUAWEI TECHNOLOGIES CO., LTD., Shenzhen, Guangdong 518129 (CN)
(72) Inventor: ZHENG, Juan, Shenzhen, Guangdong 518129 (CN); LI, Chaojun, Shenzhen, Guangdong 518129 (CN)
(74) Representative: Epping - Hermann - Fischer
(86) International application number: PCT/CN2018/082012
(87) International publication number: WO 2019/191971

(57) **Abstract**

Embodiments of the present invention disclose a data transmission method, a terminal device, and a network device. The method includes: receiving, by a terminal device, first indication information from a network device, where the first indication information is used to indicate to enable an uplink resource randomization rule corresponding to the terminal device, the uplink resource randomization rule is a specific rule of the terminal device, and the uplink resource randomization rule includes a randomization rule of a demodulation reference signal DMRS sequence used by the terminal device; determining, by the terminal device based on the first indication information, a first uplink resource used to transmit uplink data; and transmitting, by the terminal device, the uplink data by using the first uplink resource. The embodiments of the present invention help the network device demodulate the uplink data from the terminal device, reduce a channel estimation error, and improve data transmission reliability and flexibility. The method provided in the embodiments may be applied to a communications system, for example, V2X, LTE-V, V2V, the internet of vehicles, MTC, IoT, LTE-M, M2M, and the internet of things.

## Description

### TECHNICAL FIELD

Embodiments of the present invention relate to the field of communications technologies, and in particular, to a data transmission method, a terminal device, and a network device.

### BACKGROUND

With continuous development of communications technologies, various services emerge, for example, an enhanced mobile broadband (Enhanced Mobile Broadband, eMBB for short) service, an ultra-reliable low-latency communication (Ultra-reliable/low latency communication, URLLC for short) service, and a massive machine-type communication (Massive machine-type communication, Massive MTC) service, to meet different data transmission requirements of users. For some services having a relatively high latency requirement, for example, a URLLC service, a base station may configure as dense uplink transmission resources as possible for a terminal device in terms of time, so that the terminal device may initiate uplink data transmission as soon as possible when having an uplink transmission requirement, to reduce a latency between a time when there is an uplink data transmission requirement and a time for waiting for an uplink data transmission resource. However, because the URLLC service usually arrives in a burst manner, resource usage efficiency is reduced when a relatively dense resource configuration is performed for each terminal device in terms of time. Currently, to improve the resource usage efficiency, a plurality of terminal devices having a URLLC service requirement may share a time-frequency resource. The plurality of terminal devices that share the time-frequency resource may be distinguished by using a particular orthogonal resource. For example, the base station may fixedly configure different demodulation reference signal (Demodulation Reference Signal, DMRS for short) sequences for different terminal devices, so that the base station can determine, by identifying DMRSs, different terminal devices that share a time-frequency resource. In this way, uplink data of the terminal device is obtained.

However, related characteristics of different DMRS sequences corresponding to different terminal devices are related to a channel transmission state, and related characteristics of two DMRSs with low related characteristics may change in some channel conditions. For example, it is assumed that DMRS sequences used by different terminal devices are generated based on different cyclic shifts (Cyclic Shift, CS for short) of a same base sequence, and different cyclic shifts of one base sequence corresponding to one DMRS sequence may be any one of 0 to 11. It can be learned that in a scenario in which a plurality of terminal devices share a time-frequency resource, a deviation between CSs corresponding to two DMRS sequences with a lowest related characteristic is 6. For example, a CS corresponding to one terminal device is 0, and a CS corresponding to the other terminal device is 6. For another example, a CS corresponding to one terminal device is 3, and a CS corresponding to the other terminal device is 9. However, in some channel conditions, for example, due to a channel latency spread, related characteristics between two terminal devices received by the base station are not always related characteristics corresponding to two CSs with a deviation of 6, and the related characteristics may be reduced due to impact of a channel. This affects identification, by the base station, of the terminal device that transmits the uplink data by using the shared time-frequency resource, and increases an error in DMRS-based channel estimation. Consequently, demodulation of the uplink data by the base station is affected, the uplink data fails to be demodulated or is incorrectly demodulated, uplink data transmission reliability is relatively poor, and data transmission flexibility is relatively poor.

### SUMMARY

Embodiments of the present invention provide a data transmission method, a terminal device, and a network device, to help the network device demodulate uplink data from the terminal device, reduce a channel estimation error, and improve data transmission reliability and flexibility.

According to one aspect, an embodiment of the present invention provides a data transmission method. The method includes: receiving, by a terminal device, first indication information from a network device, where the first indication information is used to indicate to enable an uplink resource randomization rule corresponding to the terminal device; determining, by the terminal device based on the first indication information, a first uplink resource used to transmit uplink data; and transmitting, by the terminal device, the uplink data by using the first uplink resource. The uplink resource randomization rule is a specific rule of the terminal device, and the uplink resource randomization rule may include a randomization rule of a DMRS sequence used by the terminal device. In other words, after receiving the first indication information, the terminal device may transmit the uplink data by using an uplink resource corresponding to the uplink resource randomization rule corresponding to the terminal device. This helps the network device demodulate the uplink data from the terminal device, reduce a channel estimation error, and improve data transmission reliability and flexibility.

In a possible design, the terminal device may further receive second indication information from the network device, where the second indication information is used to indicate to disable the uplink resource randomization rule corresponding to the terminal device; the terminal device determines, based on the second indication information, a second uplink resource used to transmit uplink data; and the terminal device transmits the uplink data by using the second uplink resource. In other words, after receiving the second indication information, the terminal device may no longer transmit the uplink data by using the uplink resource corresponding to the uplink resource randomization rule corresponding to the terminal device. For example, the terminal device may transmit the uplink data by using an uplink resource configured by default or another uplink resource. Therefore, flexibility of determining an uplink resource is improved, and further, flexibility of data transmission is improved.

In a possible design, the first indication information and the second indication information may be sent by using different messages. In other words, the first indication information and the second indication information may be carried in different messages. Alternatively, the first indication information and the second indication information may be sent by using a same message. For example, the first indication information and the second indication information may be carried in a same control channel, and different values of same control information are used to represent the first indication information or the second indication information. A manner of sending the first indication information and the second indication information is not limited in this application. Further optionally, the first indication information and/or the second indication information may be sent by the network device to the terminal device by using higher layer signaling or physical layer signaling.

In a possible design, the terminal device may further receive first resource configuration information from the network device, where the first resource configuration information is used to indicate an uplink resource used by the terminal device after the terminal device enables the uplink resource randomization rule. The indication manner may be explicit indication or implicit indication. Further, the determining, by the terminal device, a first uplink resource used to transmit uplink data may be specifically: determining, by the terminal device based on the first resource configuration information, the first uplink resource used to transmit the uplink data. The first resource configuration information may include at least one of information about a DMRS sequence used for uplink data demodulation, information about a time resource used for uplink data transmission, information about a frequency resource used for uplink data transmission, and the like. For example, the first resource configuration information may include the information about the DMRS sequence used for uplink data demodulation. Optionally, the first resource configuration information may further include the information about the time resource used for uplink data transmission and/or the information about the frequency resource used for uplink data transmission. In other words, the uplink resource randomization rule includes determining, based on the first resource configuration information, the uplink resource used by the terminal device to transmit the uplink data, and the first resource configuration information is specific resource configuration information of the terminal device. Therefore, after receiving the first indication information, the terminal device can directly and quickly determine, based on the first resource configuration information, the uplink resource used to transmit the uplink data.

In a possible design, the terminal device may further receive second resource configuration information from the network device. Further, the determining, by the terminal device, a first uplink resource used to transmit uplink data may be specifically: determining, by the terminal device based on the second resource configuration information and a preset randomization rule, the first uplink resource used to transmit the uplink data. The second resource configuration information may include at least one of information about a DMRS sequence used for uplink data demodulation, information about a time resource used for uplink data transmission, information about a frequency resource used for uplink data transmission, and the like. For example, the second resource configuration information may include the information about the DMRS sequence used for uplink data demodulation. Optionally, the second resource configuration information may further include the information about the time resource used for uplink data transmission and/or the information about the frequency resource used for uplink data transmission. In other words, the uplink resource randomization rule includes determining, based on the second resource configuration information and the preset randomization rule, the uplink resource used by the terminal device to transmit the uplink data. In other words, the second resource configuration information is specific resource configuration information of the terminal device and/or the preset randomization rule is a specific rule of the terminal device. The preset randomization rule may be preset. Therefore, after receiving the first indication information, the terminal device can quickly determine, based on the second resource configuration information and the preset randomization rule, the uplink resource used to transmit the uplink data.

In a possible design, the second resource configuration information may be used to indicate an uplink resource used before the uplink resource randomization rule corresponding to the terminal device is enabled and/or an uplink resource used after the uplink resource randomization rule corresponding to the terminal device is disabled. Therefore, the terminal device may determine, based on the second resource configuration information, the uplink resource used before the uplink resource randomization rule corresponding to the terminal device is enabled and/or the uplink resource used after the uplink resource randomization rule corresponding to the terminal device is disabled. For example, after receiving the second indication information, the terminal device may determine the second uplink resource based on the second resource configuration information. In this way, the terminal device can determine, through one piece of resource configuration information, an uplink resource for enabling (with reference to the preset randomization rule) and an uplink resource for disabling the uplink resource randomization rule corresponding to the terminal device, to transmit the uplink data. This reduces system signaling overheads.

In a possible design, the terminal device may further receive third resource configuration information from the network device, where the third resource configuration information may be used to indicate an uplink resource used after the uplink resource randomization rule corresponding to the terminal device is disabled. Further, the determining, by the terminal device, a second uplink resource used to transmit uplink data may be specifically: determining, by the terminal device based on the third resource configuration information, the second uplink resource used to transmit the uplink data. Optionally, the third resource configuration information may be further used to indicate an uplink resource used before the uplink resource randomization rule corresponding to the terminal device is enabled. The third resource configuration information may include at least one of information about a DMRS sequence used for uplink data demodulation, information about a time resource used for uplink data transmission, and information about a frequency resource used for uplink data transmission. For example, the third resource configuration information may include the information about the DMRS sequence. Optionally, the third resource configuration information may further include the information about the time resource used for uplink data transmission and/or the information about the frequency resource used for uplink data transmission. In other words, the terminal device may determine, by receiving the third resource configuration information sent by the network device, the uplink resource used before the uplink resource randomization rule corresponding to the terminal device is enabled and/or the uplink resource used after the uplink resource randomization rule corresponding to the terminal device is disabled, to perform data transmission. Further, the terminal device may further determine the first uplink resource by receiving the first resource configuration information, or determine the first uplink resource by receiving the second resource configuration information and with reference to the preset randomization rule, or determine the first uplink resource according to the preset randomization rule. Therefore, an uplink resource used after the uplink resource randomization rule corresponding to the terminal device is enabled and the uplink resource used after the uplink resource randomization rule corresponding to the terminal device is disabled can be separately and quickly determined based on different resource configuration information or rules, thereby improving resource determining efficiency.

In a possible design, the information about the DMRS sequence includes at least one of the following: a DMRS base sequence, a comb pattern of the DMRS sequence, a cyclic shift of the DMRS sequence, and the like.

In a possible design, randomization of the DMRS sequence includes at least one of the following: randomization of the DMRS base sequence, randomization of the comb pattern of the DMRS sequence, and randomization of the cyclic shift of the DMRS sequence.

In a possible design, the uplink resource randomization rule may be associated with an identifier of the terminal device, or the uplink resource randomization rule is associated with an identifier of the terminal device and a time unit in which the terminal device transmits the uplink data, or the uplink resource randomization rule is associated with an identifier of the terminal device and a quantity of times the terminal device repeatedly transmits the uplink data.

In a possible design, transmission of the uplink data may be performed by the terminal device based on grant free scheduling; and the grant free scheduling may be implemented based on a semi-persistent scheduling (Semi-Persistent Scheduling, SPS for short) mechanism, or is implemented based on higher layer signaling configuration, or is implemented based on both higher layer signaling configuration and a physical layer signaling indication.

In a possible design, the first resource configuration information and/or the second resource configuration information and/or the third resource configuration information may be sent by the network device to the terminal device by using higher layer signaling, or may be sent to the terminal device by using physical layer signaling, or may be sent to the terminal device by using both higher layer signaling and physical layer signaling.

According to another aspect, an embodiment of the present invention further provides a data transmission method. The method includes: generating, by a network device, first indication information, where the first indication information is used to indicate to enable an uplink resource randomization rule corresponding to a terminal device; and sending, by the network device, the first indication information to the terminal device. The uplink resource randomization rule is a specific rule of the terminal device, and the uplink resource randomization rule includes a randomization rule of a demodulation reference signal DMRS sequence used by the terminal device. In other words, the network device may send the first indication information to the terminal device, to enable the uplink resource randomization rule corresponding to the terminal device, so that the terminal device transmits uplink data based on an uplink resource corresponding to the uplink resource randomization rule. This helps the network device demodulate the uplink data from the terminal device, reduce a channel estimation error, and improve data transmission reliability and flexibility.

In a possible design, the network device may further generate second indication information, where the second indication information is used to indicate to disable the uplink resource randomization rule corresponding to the terminal device; and sending, by the network device, the second indication information to the terminal device. In other words, the network device may send the second indication information to the terminal, to indicate the terminal device not to use the uplink resource corresponding to the uplink resource randomization rule to transmit the uplink data. Therefore, flexibility of determining an uplink resource is improved, and further, flexibility of data transmission is improved.

In a possible design, the first indication information and the second indication information may be sent by using different messages. In other words, the first indication information and the second indication information may be carried in different messages. Alternatively, the first indication information and the second indication information may be sent by using a same message. For example, the first indication information and the second indication information may be carried in a same control channel, and different values of same control information are used to represent the first indication information or the second indication information. A manner of sending the first indication information and the second indication information is not limited in this application. Further optionally, the first indication information and/or the second indication information may be sent by the network device to the terminal device by using higher layer signaling or physical layer signaling.

In a possible design, the network device may further send first resource configuration information to the terminal device, where the first resource configuration information is used to indicate an uplink resource used by the terminal device after the terminal device enables the uplink resource randomization rule, and the first resource configuration information may include at least one of information about a DMRS sequence used for uplink data demodulation, information about a time resource used for uplink data transmission, and information about a frequency resource used for uplink data transmission. For example, the first resource configuration information may include the information about the DMRS sequence used for uplink data demodulation. Optionally, the first resource configuration information may further include the information about the time resource used for uplink data transmission and/or the information about the frequency resource used for uplink data transmission. In other words, the network device can send the first resource configuration information to the terminal device, so that after receiving the first indication information, the terminal device can directly and quickly determine, based on the first resource configuration information, the uplink resource used to transmit the uplink data. In other words, the uplink resource randomization rule includes determining, based on the first resource configuration information, the uplink resource used by the terminal device to transmit the uplink data, and the first resource configuration information is specific resource configuration information of the terminal device. Therefore, the network device can send the first resource configuration information to the terminal device, so that after receiving the first indication information, the terminal device can directly and quickly determine, based on the first resource configuration information, the uplink resource used to transmit the uplink data.

In a possible design, the network device may send second resource configuration information to the terminal device, where the second resource configuration information may include at least one of information about a DMRS sequence used for uplink data demodulation, information about a time resource used for uplink data transmission, and information about a frequency resource used for uplink data transmission. For example, the second resource configuration information may include the information about the DMRS sequence used for uplink data demodulation. Optionally, the second resource configuration information may further include the information about the time resource used for uplink data transmission and/or the information about the frequency resource used for uplink data transmission. In other words, the network device can send the second resource configuration information to the terminal device, so that after receiving the first indication information, the terminal device can determine, based on the second resource configuration information and a preset randomization rule, the uplink resource used to transmit the uplink data. In other words, the uplink resource randomization rule includes determining, based on the second resource configuration information and the preset randomization rule, the uplink resource used by the terminal device to transmit the uplink data, and the second resource configuration information is specific resource configuration information of the terminal device and/or the preset randomization rule is a specific rule of the terminal device. The preset randomization rule may be preset.

In a possible design, the network device may further send third resource configuration information to the terminal device, where the third resource configuration information may be used to indicate an uplink resource used before the uplink resource randomization rule corresponding to the terminal device is enabled and/or an uplink resource used after the uplink resource randomization rule corresponding to the terminal device is disabled, and the third resource configuration information may include at least one of the information about the DMRS sequence used for uplink data demodulation, the information about the time resource used for uplink data transmission, and the information about the frequency resource used for uplink data transmission. For example, the third resource configuration information may include the information about the DMRS sequence used for uplink data demodulation. Optionally, the third resource configuration information may further include the information about the time resource used for uplink data transmission and/or the information about the frequency resource used for uplink data transmission. Therefore, the network device can send the third resource configuration information to the terminal device, so that the terminal device determines, based on the third resource configuration information, the uplink resource used before the uplink resource randomization rule corresponding to the terminal device is enabled and/or the uplink resource used after the uplink resource randomization rule corresponding to the terminal device is disabled. For example, after receiving the second indication information, the terminal device determines the second uplink resource based on the third resource configuration information. Further optionally, the network device may further send the first resource configuration information or the second resource configuration information to the terminal device, so that the terminal device determines (with reference to the preset randomization rule) the first uplink resource based on the first resource configuration information or the second resource configuration information. Therefore, the network device can quickly determine, by separately sending different resource configuration information, an uplink resource used after the uplink resource randomization rule corresponding to the terminal device is enabled and the uplink resource used after the uplink resource randomization rule corresponding to the terminal device is disabled, thereby improving resource determining efficiency.

In a possible design, the information about the DMRS sequence includes at least one of the following: a DMRS base sequence, a comb pattern of the DMRS sequence, and a cyclic shift of the DMRS sequence.

In a possible design, randomization of the DMRS sequence includes at least one of the following: randomization of the DMRS base sequence, randomization of the comb pattern of the DMRS sequence, and randomization of the cyclic shift of the DMRS sequence.

In a possible design, the uplink resource randomization rule is associated with an identifier of the terminal device, or the uplink resource randomization rule is associated with an identifier of the terminal device and a time unit in which the terminal device transmits the uplink data, or the uplink resource randomization rule is associated with an identifier of the terminal device and a quantity of times the terminal device repeatedly transmits the uplink data.

In a possible design, the first resource configuration information and/or the second resource configuration information and/or the third resource configuration information may be sent by the network device to the terminal device by using higher layer signaling, or may be sent to the terminal device by using physical layer signaling, or may be sent to the terminal device by using both higher layer signaling and physical layer signaling.

According to still another aspect, an embodiment of the present invention further provides a terminal device. The terminal device has some or all functions of implementing actions of the terminal device in the foregoing method examples. For example, the terminal device may have functions in some or all embodiments of this application, or may have a function of independently implementing any embodiment of this application. The function may be implemented by hardware, or may be implemented by hardware executing corresponding software. The hardware or the software includes one or more units or modules corresponding to the foregoing function.

In a possible design, a structure of the terminal device may include a processing unit and a communications unit. The processing unit is configured to support the terminal device in performing the corresponding functions in the foregoing methods. The communications unit is configured to support communication between the terminal device and another device. The terminal device may further include a storage unit. The storage unit is configured to couple to the processing unit, and stores a program instruction and data that are necessary for the terminal device. In an example, the processing unit may be a processor, the communications unit may be a transceiver, and the storage unit may be a memory.

According to still another aspect, an embodiment of the present invention provides a network device. The network device has some or all functions of implementing actions of the network device in the foregoing method examples. For example, the network device may have functions in some or all embodiments of this application, or may have a function of independently implementing any embodiment of this application. The function may be implemented by hardware, or may be implemented by hardware executing corresponding software. The hardware or the software includes one or more units or modules corresponding to the foregoing function.

In a possible design, a structure of the network device includes a processing unit and a communications unit. The processing unit is configured to support the network device in performing the corresponding functions in the foregoing methods. The communications unit is configured to support communication between the network device and another device. The network device may further include a storage unit. The storage unit is configured to couple to the processing unit, and stores a program instruction and data that are necessary for the network device. In an example, the processing unit may be a processor, the communications unit may be a transceiver, and the storage unit may be a memory.

According to still another aspect, an embodiment of the present invention provides a communications system, and the system includes the terminal device and/or the network device in the foregoing aspects. In another possible design, the system may further include another device that interacts with the terminal device or the network device in the solutions provided in the embodiments of the present invention.

According to still another aspect, an embodiment of the present invention provides a computer storage medium, configured to store computer software instructions used by the foregoing terminal device. The computer storage medium includes a program designed for executing any aspect of the foregoing method.

According to still another aspect, an embodiment of the present invention provides a computer storage medium, configured to store computer software instructions used by the foregoing network device. The computer storage medium includes a program designed for executing any aspect of the foregoing method.

According to still another aspect, this application further provides a computer program product including an instruction. When the computer program product is run on a computer, the computer is enabled to perform the methods described in all the foregoing aspects.

According to still another aspect, this application provides a chip system. The chip system includes a processor, configured to support a terminal device in implementing the functions in the foregoing aspects, for example, determining or processing the data and/or the information in the foregoing methods. In a possible design, the chip system further includes a memory. The memory is configured to store a program instruction and data that are necessary for the terminal device. The chip system may include a chip, or may include a chip and another discrete device.

According to still another aspect, this application provides a chip system. The chip system includes a processor, configured to support a network device in implementing the functions in the foregoing aspects, for example, generating or processing the data and/or the information in the foregoing methods. In a possible design, the chip system further includes a memory. The memory is configured to store a program instruction and data that are necessary for the network device. The chip system may include a chip, or may include a chip and another discrete device.

Compared with the prior art, in the solution provided in the embodiments of the present invention, the network device can send the indication information to the terminal device, to indicate to enable the specific uplink resource randomization rule corresponding to the terminal device. Therefore, the terminal device can determine, based on the indication information, the uplink resource used to transmit the uplink data, and use the uplink resource to transmit the uplink data, thereby helping the network device demodulate the uplink data from the terminal device, reducing the channel estimation error, and improving data transmission reliability and flexibility.

### BRIEF DESCRIPTION OF DRAWINGS

To describe the technical solutions in the embodiments of the present invention or in the background more clearly, the following describes the accompanying drawings required for describing the embodiments of the present invention or the background.
FIG. 1 is a schematic structural diagram of a communications system according to an embodiment of the present invention;
FIG. 2a is a schematic diagram of sharing a time-frequency resource by a plurality of terminal devices according to an embodiment of the present invention;
FIG. 2b is another schematic diagram of sharing a time-frequency resource by a plurality of terminal devices according to an embodiment of the present invention;
FIG. 2c is still another schematic diagram of sharing a time-frequency resource by a plurality of terminal devices according to an embodiment of the present invention;
FIG. 3 is a schematic flowchart of a data transmission method according to an embodiment of the present invention;
FIG. 4 is a schematic flowchart of another data transmission method according to an embodiment of the present invention;
FIG. 5 is a schematic structural diagram of a comb according to an embodiment of the present invention;
FIG. 6 is a schematic flowchart of still another data transmission method according to an embodiment of the present invention;
FIG. 7 is a schematic structural diagram of a terminal device according to an embodiment of the present invention;
FIG. 8 is a schematic structural diagram of another terminal device according to an embodiment of the present invention;
FIG. 9 is a schematic structural diagram of still another terminal device according to an embodiment of the present invention;
FIG. 10 is a schematic structural diagram of a network device according to an embodiment of the present invention;
FIG. 11 is a schematic structural diagram of another network device according to an embodiment of the present invention; and
FIG. 12 is a schematic structural diagram of still another network device according to an embodiment of the present invention.

### DESCRIPTION OF EMBODIMENTS

The following describes the embodiments of the present invention with reference to the accompanying drawings in the embodiments of the present invention.

It should be understood that the technical solutions in this application may be specifically applied to various communications systems, for example, a global system for mobile communications (Global system for mobile communications, GSM for short), a code division multiple access (Code Division Multiple Access, CDMA for short) system, a wideband code division multiple access (Wideband Code Division Multiple Access, WCDMA for short) system, a time division-synchronous code division multiple access (Time Division-Synchronous Code Division Multiple Access, TD-SCDMA for short) system, a universal mobile telecommunications system (Universal Mobile Telecommunications System, UMTS for short), and a long term evolution (Long Term Evolution, LTE for short) system. With continuous development of communications technologies, the technical solutions in this application may be further applied to a future network, for example, a 5G system, or referred to as a new radio (New Radio, NR for short) network, or the technical solutions may be applied to a D2D (device to device) system, an M2M (machine to machine) system, or the like.

A network device in this application may be an entity used to send or receive information at a network side, and may be, for example, a base station, a transmission point (transmission point, TP for short), a transmission reception point (transmission and receiver point, TRP for short), a relay device, or another network device that has a base station function. This is not limited in this application.

In this application, a terminal device is a device having a communication function, and may be, for example, a handheld device having a wireless communication function, a vehicle-mounted device, a wearable device, a computing device, or another processing device connected to a wireless modem. The terminal device may have different names in different networks, for example, a terminal, user equipment (user equipment, UE for short), a mobile station, a subscriber unit, a relay Relay, a station, a cellular phone, a personal digital assistant, a wireless modem, a wireless communications device, a handheld device, a laptop computer, a cordless phone, and a wireless local loop station. The terminal device may be a wireless terminal or a wired terminal. The wireless terminal may be a device that provides a user with voice and/or data connectivity, a handheld device with a wireless connection function, or another processing device connected to a wireless modem. The wireless terminal may communicate with one or more core networks by using a radio access network (RAN, radio access network).

In this application, a base station may also be referred to as a base station device, which is a device that is deployed in a radio access network to provide a wireless communication function. The base station may have different names in different radio access systems. For example, a base station in a UMTS network is referred to as a NodeB (NodeB), a base station in an LTE network is referred to as an evolved NodeB (evolved NodeB, eNB or eNodeB for short), and a base station in a future 5G system may be referred to as a TRP network node or a gNodeB (g-NodeB, gNB). This is not listed one by one herein.

In this application, a time unit may be a location used for data transmission in time domain, or may be referred to as a scheduling unit or another name. Optionally, the time unit may be a subframe, or may be a slot (slot), or may be a radio frame, a mini slot (mini slot or sub slot, or referred to as a sub-slot), a plurality of aggregated slots, a plurality of aggregated subframes, a symbol, duration of a pre-allocated resource, or the like, or may be a transmission time interval (Transmission Time Interval, TTI for short), or may be a scheduling occasion, or the like. This is not limited in this application. The transmission time interval TTI may be 1 ms, or may be one slot (for example, 0.5 ms in the LTE system or 14 orthogonal frequency division multiplexing (Orthogonal Frequency Division Multiplexing, OFDM for short) symbols in the NR system), or may be one mini-slot, where mini-slots appearing at different time locations may include a same OFDM symbol or different OFDM symbols, or the TTI may have another representation form. This is not limited in this application. Further optionally, the technical solutions of this application may be applied to a licensed spectrum (or referred to as a "licensed spectrum", a "licensed band", a "licensed band", or the like), or may be applied to an unlicensed spectrum (or referred to as an "unlicensed spectrum", an "unlicensed band", an "unlicensed band", or the like). This is not limited in this application.

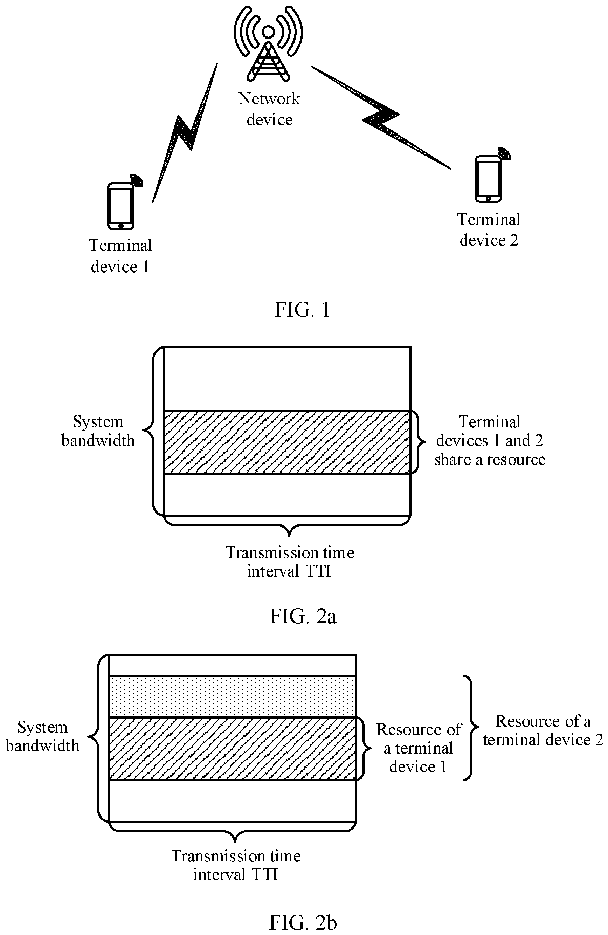

The following describes an application scenario of this application. FIG. 1 is an architectural diagram of a communications system according to an embodiment of the present invention. Specifically, as shown in FIG. 1, the communications system may include a network device and at least one terminal device (two terminal devices, that is, a terminal device 1 and a terminal device 2, are used as an example for description in the figure). The at least one terminal device and the network device may communicate with each other by using the foregoing communications system. When the at least one terminal device includes at least two terminal devices, the at least one terminal device may share a time-frequency resource (a time resource and a frequency resource). In other words, when the at least one terminal device sends uplink data to the network device, the at least one terminal device may use a same time resource and a same frequency resource to perform data transmission.

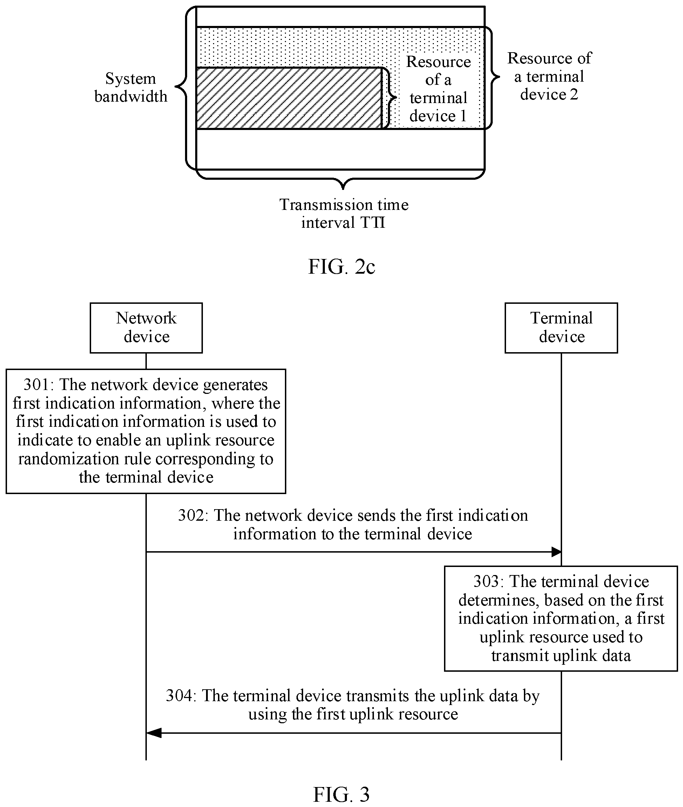

The shared time-frequency resource may be an overlapping (including partial overlapping or complete overlapping) part between uplink resources (including the time resource and/or the frequency resource) used by terminal devices to transmit uplink data. For example, FIG. 2a to FIG. 2c are schematic structural diagrams of several shared time-frequency resources according to an embodiment of the present invention. As shown in FIG. 2a, time-frequency resources used by a terminal device 1 and a terminal device 2 completely overlap. As shown in FIG. 2b, frequency resources used by a terminal device 1 and a terminal device 2 partially overlap. As shown in FIG. 2c, time resources and frequency resources used by a terminal device 1 and a terminal device 2 partially overlap. In FIG. 2a to FIG. 2c, it may be considered that different terminal devices share a time-frequency resource. There are a relatively large quantity of scenarios in which different terminal devices share a time-frequency resource, for example, scenarios of multi-user multiple-input multiple-output (Multi-User Multiple Input Multiple Output, MU-MIMO for short) and uplink transmission based on uplink grant free scheduling (UL Grant Free), which are not listed one by one herein.

In an actual process of data transmission, because related characteristics of different DMRS sequences corresponding to different terminal devices are related to a channel transmission state, related characteristics of two DMRSs with low related characteristics may change in some channel conditions. Therefore, when a fixed DMRS sequence is used to transmit uplink data, demodulation of the uplink data by a network device is affected, and even a problem that demodulation of the uplink data fails or is incorrect may occur. Therefore, the network device can send indication information to the terminal device, to indicate to enable a specific uplink resource randomization rule corresponding to the terminal device. Therefore, the terminal device can determine, based on the indication information, an uplink resource used to transmit uplink data, thereby helping the network device demodulate the uplink data from the terminal device and improving data transmission reliability. In addition, the indication information is used to indicate the terminal device whether to enable the uplink resource randomization rule corresponding to the terminal device. This helps improve flexibility of randomization of the uplink resource. For example, if a quantity of terminal devices sharing a time-frequency resource is not large, the network device may disable, by using the indication information, the uplink resource randomization rule corresponding to the terminal device, it can still be ensured that the network device demodulates the uplink data from the terminal device, and detection complexity of the network device can be further reduced. In another aspect, for example, if a quantity of terminal devices sharing a time-frequency resource is relatively large, the network device may enable, by using the indication information, the uplink resource randomization rule corresponding to the terminal device, so that uplink resource interference between the plurality of terminal devices sharing the time-frequency resource is randomized, thereby ensuring demodulation of the uplink data from the terminal device by the network device. It should be noted that the foregoing is merely an example for describing an application scenario in which enabling signaling is used. A case in which the network device enables or disables, by using the indication information, the uplink resource randomization rule corresponding to the terminal device is not specifically limited in this application.

This application discloses a data transmission method, a terminal device, and a network device, to help the network device demodulate uplink data from the terminal device, reduce a channel estimation error, and improve data transmission reliability and flexibility. Details are separately described in the following.

FIG. 3 is a schematic flowchart of a data transmission method according to an embodiment of the present invention. Specifically, as shown in FIG. 3, the data transmission method in this embodiment of the present invention may include the following steps.

301: A network device generates first indication information, where the first indication information is used to indicate to enable an uplink resource randomization rule corresponding to a terminal device.

The uplink resource randomization rule may be a specific rule of the terminal device, but not a randomization rule of a cell. Optionally, the uplink resource randomization rule may include one or more of a randomization rule of a demodulation reference signal DMRS sequence used by the terminal device, a randomization rule of a time resource used by the terminal device for uplink data transmission, and a randomization rule of a frequency resource used for uplink data transmission. For example, the uplink resource randomization rule includes only the randomization rule of the DMRS sequence used by the terminal device. For another example, the uplink resource randomization rule includes the randomization rule of the DMRS sequence used by the terminal device, and the randomization rule of the time resource used by the terminal device for uplink data transmission and/or the randomization rule of the frequency resource used for uplink data transmission.

302: The network device sends the first indication information to the terminal device.

Specifically, when the terminal device needs to perform uplink resource randomization, the network device may generate one piece of indication information, that is, the first indication information, and send the first indication information to the terminal device, to indicate the terminal device to enable the uplink resource randomization rule corresponding to the terminal device.

303: The terminal device determines, based on the first indication information, a first uplink resource used to transmit uplink data.

304: The terminal device transmits the uplink data by using the first uplink resource.

Further, the terminal device may receive the first indication information sent by the network device, and may enable, based on the first indication information, the uplink resource randomization rule corresponding to the terminal device, to further determine an uplink resource obtained after the uplink resource randomization, that is, the first uplink resource. For example, after receiving the first indication information, the terminal device may determine the first uplink resource based on resource configuration information sent by the network device and/or a preset randomization rule. Further, the terminal device may transmit data by using the first uplink resource, and communicate with the network device.

Optionally, the network device may further generate second indication information, where the second indication information is used to indicate to disable the uplink resource randomization rule corresponding to the terminal device, so that the network device may send the second indication information to the terminal device, to indicate to disable the uplink resource randomization rule corresponding to the terminal device. Further, the terminal device may receive the second indication information sent by the network device, and determine, based on the second indication information, an uplink resource used to transmit uplink data, that is, a second uplink resource. In other words, the network device may send the second indication information to the terminal, to indicate the terminal device not to use the uplink resource corresponding to the uplink resource randomization rule to transmit the uplink data. After receiving the second indication information, the terminal device no longer uses the uplink resource corresponding to the uplink resource randomization rule corresponding to the terminal device to transmit the uplink data, but may transmit the uplink data by using an uplink resource configured by default or another uplink resource. Therefore, flexibility of determining an uplink resource is improved, and further, flexibility of data transmission is improved.

The first indication information and the second indication information may be sent by using different messages. In other words, the first indication information and the second indication information may be carried in different messages. Alternatively, the first indication information and the second indication information may be sent by using a same message. For example, the first indication information and the second indication information may be carried in a same control channel, and different values of a same piece of control information are used to represent the first indication information or the second indication information, for example, when a value of the control information is 0, it indicates that the uplink resource randomization rule corresponding to the terminal device is disabled (equivalent to the second indication information); and when a value of the control information is 1, it indicates that the uplink resource randomization rule corresponding to the terminal device is enabled (equivalent to the first indication information). A manner of sending the first indication information and the second indication information is not limited in this application. Further optionally, the first indication information and/or the second indication information may be sent by the network device to the terminal device by using higher layer signaling or physical layer signaling. The higher layer signaling may be radio resource control (Radio Resource Control, RRC) signaling, and the physical layer signaling may be carried in a physical layer control channel, for example, may be carried in a physical downlink control channel (Physical Downlink Control Channel, PDCCH), or may be carried in an enhanced physical downlink control channel (Enhanced Physical Downlink Control Channel, EPDCCH). The physical layer control channel herein may be a physical layer control channel in an LTE system, or may be a physical layer control channel in an NR system, or may be a physical layer control channel in a future wireless communications system. This is not specifically limited. The same descriptions are provided for the higher layer signaling, and details are not described again.

Further optionally, the network device may further send first resource configuration information to the terminal device, where the first resource configuration information is used to indicate an uplink resource used by the terminal device after the terminal device enables the uplink resource randomization rule. Further, the terminal device may receive the first resource configuration information from the network device, and further may determine, based on the first resource configuration information after receiving the first indication information, the first uplink resource used to transmit the uplink data. The first resource configuration information may include at least one of information about a DMRS sequence used for uplink data demodulation, information about a time resource used for uplink data transmission, information about a frequency resource used for uplink data transmission, and the like. For example, the first resource configuration information may include the information about the DMRS sequence used for uplink data demodulation. Optionally, the first resource configuration information may further include the information about the time resource used for uplink data transmission and/or the information about the frequency resource used for uplink data transmission. Specifically, the first resource configuration information may carry information about the first uplink resource, so that after receiving the first indication information, the terminal device can directly and quickly determine, based on the first resource configuration information, the uplink resource used to transmit the uplink data after the uplink resource randomization rule is enabled. In other words, the uplink resource randomization rule may include determining, by the terminal device based on the first resource configuration information, the uplink resource used by the terminal device to transmit the uplink data, and the first resource configuration information is specific resource configuration information of the terminal device. In this case, that the first indication information is used to indicate to enable the uplink resource randomization rule corresponding to the terminal device may be understood as that the first indication information is used to indicate the terminal device to determine, based on the first resource configuration information, the uplink resource used by the terminal device to transmit the uplink data.

Further optionally, the network device may further send second resource configuration information to the terminal device, and the terminal device may receive the second resource configuration information from the network device. After receiving the first indication information, the terminal device may further determine, based on the second resource configuration information and a preset randomization rule, the first uplink resource used to transmit the uplink data. The second resource configuration information may include at least one of information about a DMRS sequence used for uplink data demodulation, information about a time resource used for uplink data transmission, information about a frequency resource used for uplink data transmission, and the like. For example, the second resource configuration information may include the information about the DMRS sequence used for uplink data demodulation. Optionally, the second resource configuration information may further include the information about the time resource used for uplink data transmission and/or the information about the frequency resource used for uplink data transmission. In other words, the uplink resource randomization rule includes determining, based on the second resource configuration information and the preset randomization rule, the uplink resource used by the terminal device to transmit the uplink data. In other words, the second resource configuration information is specific resource configuration information of the terminal device and/or the preset randomization rule is a specific rule of the terminal device. The preset randomization rule may be preset. In this case, that the first indication information is used to indicate to enable the uplink resource randomization rule corresponding to the terminal device may be understood as that the first indication information is used to indicate the terminal device to determine, based on the second resource configuration information and the preset randomization rule, the uplink resource used to transmit the uplink data.

Optionally, the second resource configuration information may be further used to indicate an uplink resource used by the terminal device when the uplink resource randomization rule is disabled or is not enabled, that is, the second resource configuration information may be used to indicate an uplink resource used before the uplink resource randomization rule corresponding to the terminal device is enabled and/or an uplink resource used after the uplink resource randomization rule corresponding to the terminal device is disabled. Therefore, the terminal device may determine, based on the second resource configuration information, the uplink resource used before the uplink resource randomization rule corresponding to the terminal device is enabled and/or the uplink resource used after the uplink resource randomization rule corresponding to the terminal device is disabled. For example, after receiving the second indication information, the terminal device may determine the second uplink resource based on the second resource configuration information. In this way, the terminal device can determine, through one piece of resource configuration information, a corresponding uplink resource for enabling (with reference to the preset randomization rule) and a corresponding uplink resource for disabling the uplink resource randomization rule corresponding to the terminal device, to transmit the uplink data. For example, the second resource configuration information may carry information about the second uplink resource. In this case, the terminal device may directly determine the second uplink resource based on the second resource configuration information, and may determine the first uplink resource based on the second resource configuration information and the preset randomization rule. Further, the uplink data is transmitted based on the first resource and the second resource. This reduces system signaling overheads.

Further optionally, the network device may further send third resource configuration information to the terminal device, where the third resource configuration information may be used to indicate an uplink resource used before the uplink resource randomization rule corresponding to the terminal device is enabled and/or an uplink resource used after the uplink resource randomization rule corresponding to the terminal device is disabled, that is, indicate an uplink resource used when the uplink resource randomization rule is disabled or is not enabled. Further, the terminal device may receive the third resource configuration information from the network device, and further determine, based on the third resource configuration information, the second uplink resource used to transmit the uplink data. The third resource configuration information may include at least one of information about a DMRS sequence used for uplink data demodulation, information about a time resource used for uplink data transmission, and information about a frequency resource used for uplink data transmission. For example, the second resource configuration information may include the information about the DMRS sequence. Optionally, the second resource configuration information may further include the information about the time resource used for uplink data transmission and/or the information about the frequency resource used for uplink data transmission. In other words, the network device may send the third resource configuration information to the terminal device, so that the terminal device can directly determine, through the third resource configuration information, the uplink resource used before the uplink resource randomization rule is enabled and/or the uplink resource used after the uplink resource randomization rule is disabled. For example, after receiving the second indication information, the terminal device determines the second uplink resource based on the third resource configuration information. Further optionally, the terminal device may further receive the first resource configuration information or the second resource configuration information to determine the first uplink resource, or the uplink resource randomization rule may be preset. Therefore, the terminal device can separately and quickly determine, based on different resource configuration information or rules, an uplink resource used after the uplink resource randomization rule corresponding to the terminal device is enabled and the uplink resource used after the uplink resource randomization rule corresponding to the terminal device is disabled, thereby improving resource determining efficiency.

Further optionally, the information about the DMRS sequence may include at least one of the following: a DMRS base sequence, a comb pattern of the DMRS sequence, a cyclic shift of the DMRS sequence, and the like. Alternatively, the DMRS base sequence, the comb pattern of the DMRS sequence, and/or the CS of the DMRS sequence may be preconfigured.

Further optionally, randomization of the DMRS sequence includes at least one of the following: randomization of the DMRS base sequence, randomization of the comb pattern of the DMRS sequence, and randomization of the cyclic shift of the DMRS sequence.

Further optionally, the uplink resource randomization rule may be associated with an identifier of the terminal device, or the uplink resource randomization rule may be associated with an identifier of the terminal device and a time unit in which the terminal device transmits the uplink data, or the uplink resource randomization rule may be associated with an identifier of the terminal device and a quantity of times the terminal device repeatedly transmits the uplink data.

Further optionally, transmission of the uplink data may be performed by the terminal device based on grant free scheduling; and the grant free scheduling may be implemented based on an SPS mechanism, or implemented based on higher layer signaling configuration, or implemented based on both higher layer signaling configuration and a physical layer signaling indication. This is not limited in this application.

Further optionally, the first resource configuration information and/or the second resource configuration information may be sent by the network device to the terminal device by using the higher layer signaling, or may be sent to the terminal device by using the physical layer signaling, or may be sent to the terminal device by using both the higher layer signaling and the physical layer signaling. This is not limited in this application.

For example, an example in which the uplink resource includes the information about the DMRS sequence, that is, the uplink resource randomization rule includes the randomization rule of the DMRS sequence used by the terminal device is used for description. It is assumed that a cyclic shift CS corresponding to a basic DMRS sequence configured by the network device for the terminal device is 0 (the basic DMRS sequence herein may be a DMRS used by the terminal device when uplink transmission resource randomization is not considered or when uplink transmission resource randomization is not enabled, that is, when the terminal device transmits the uplink data, if the uplink transmission resource randomization is not considered, for example, the uplink resource randomization rule is not enabled or disabled, a DMRS with a CS of 0 is always used for uplink data transmission, unless the network device reconfigures a new basic DMRS sequence for the terminal device), for example, the network device sends resource configuration information to the terminal device at a moment T1 to indicate the terminal device to use a DMRS sequence with a CS of 0, and sends resource configuration information to the terminal device at a moment T2 to indicate the terminal device to use a DMRS sequence with a CS of 6. In this case, if the terminal device determines that the uplink transmission resource randomization is not enabled (for example, the first indication information is not received, or the second indication information is received), the terminal device sends the uplink data by using the DMRS with a CS of 0 in a time range from the moment T1 to the moment T2. After receiving the first indication information and enabling the uplink transmission resource randomization, the terminal device needs to consider randomization of the DMRS sequence during uplink data transmission. The randomization may be randomization based on the basic DMRS sequence, or may be randomization based on another randomization rule. This is not limited in this application. If the terminal device determines, based on the first indication information, that the uplink transmission resource randomization is enabled, in the time range from the moment T1 to the moment T2, in addition to using the DMRS with a CS of 0 to send the uplink data, after the uplink resource randomization rule is enabled, the terminal device may also send the uplink data by using a corresponding DMRS sequence obtained after randomization of a DMRS based on the CS of 0, in other words, by using a corresponding DMRS sequence obtained after randomization of a DMRS base sequence corresponding to the CS of 0; or directly determine, based on configuration information (for example, the configuration information may be the first resource configuration information mentioned above) sent by the network device, a corresponding DMRS sequence, used for uplink data transmission, obtained after the uplink resource randomization rule is enabled. On different time resources, the uplink resource randomization rule may be preset, or may be determined by the terminal device based on the resource configuration information, or may be determined by the terminal device based on the resource configuration information in combination with the preset randomization rule, or may be obtained by the terminal device through calculation according to a rule, or may be notified by the network device by using the higher layer signaling and/or the physical layer signaling, and so on. This is not limited in this application.

For another example, an example in which the uplink resource includes the information about the frequency resource, that is, the uplink resource randomization rule includes the randomization rule of the frequency resource used by the terminal device is used for description. It is assumed that a basic frequency resource configured by the network device for the terminal device is a frequency resource included between a subcarrier f1 and a subcarrier f2 that are occupied within one TTI. Understanding of the basic frequency resource is similar to understanding of the basic DMRS sequence, that is, the basic frequency resource is a frequency resource used by the terminal device when the uplink transmission resource randomization is not considered. Details are not described herein again. For example, the network device sends resource configuration information to the terminal device at the moment T1 to indicate the terminal device to use the frequency resource included between the subcarrier f1 and the subcarrier f2 as an uplink resource, and sends resource configuration information to the terminal device at the moment T2 to indicate the terminal device to use a frequency resource included between a subcarrier f3 and a subcarrier f4 as the uplink resource. In this case, if the terminal device determines that the uplink transmission resource randomization is not enabled, in the time range from the moment T1 to the moment T2, the terminal device uses the frequency resource included between the subcarrier f1 and the subcarrier f2 as the uplink resource when sending the uplink data. If the terminal device receives the first indication information, the terminal device may determine, based on the first indication information, that the uplink transmission resource randomization is enabled. In this case, in the time range from the moment T1 to the moment T2, when the terminal device sends the uplink data, in addition to using the frequency resource included between the subcarrier f1 and the subcarrier f2 as the uplink resource, after the uplink resource randomization rule is enabled, the terminal device may also use a corresponding frequency resource obtained after the basic frequency resource is randomized as the uplink resource; or directly determine, based on configuration information (for example, the configuration information may be the first resource configuration information mentioned above) sent by the network device, a corresponding frequency resource, used for uplink data transmission, obtained after the uplink resource randomization is enabled. On different time resources, the uplink resource randomization rule may be preset, or may be determined by the terminal device based on the resource configuration information, or may be determined by the terminal device based on the resource configuration information in combination with the preset randomization rule, or may be obtained by the terminal device through calculation according to a rule, or may be notified by the network device by using the higher layer signaling and/or the physical layer signaling, and so on. This is not limited in this application.

In this embodiment of the present invention, the network device can send the indication information to the terminal device, to indicate to enable the specific uplink resource randomization rule corresponding to the terminal device. Therefore, the terminal device can determine, based on the indication information, the uplink resource used to transmit the uplink data, and use the uplink resource to transmit the uplink data, to be specific, use a randomized uplink resource to transmit the uplink data, thereby helping the network device demodulate the uplink data from the terminal device, reducing a channel estimation error, and improving data transmission reliability and flexibility.

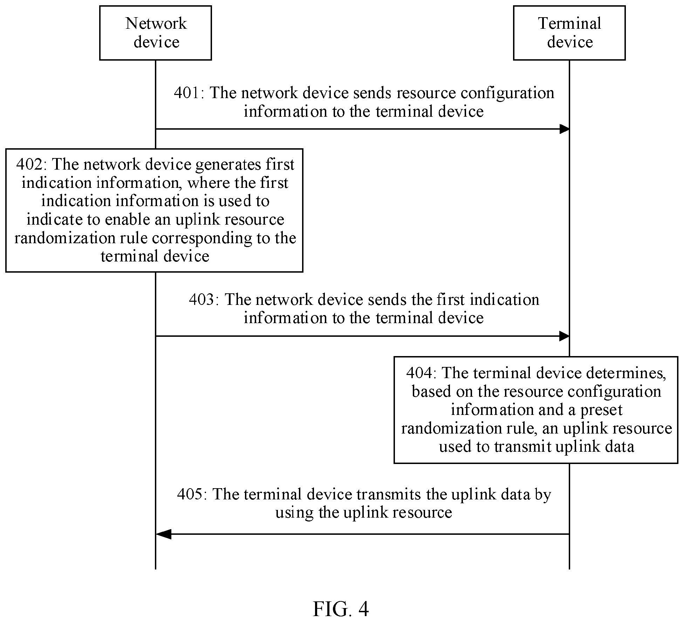

FIG. 4 is a schematic flowchart of another data transmission method according to an embodiment of the present invention. Specifically, as shown in FIG. 4, the data transmission method in this embodiment of the present invention may include the following steps.

401: A network device sends resource configuration information to a terminal device.

Specifically, the terminal device may receive the resource configuration information sent by the network device, that is, the foregoing second resource configuration information. The resource configuration information may include information about a DMRS sequence used for uplink data demodulation. Optionally, the resource configuration information may further include information about a time resource used for uplink data transmission and/or information about a frequency resource used for uplink data transmission.

402: The network device generates first indication information, where the first indication information is used to indicate to enable an uplink resource randomization rule corresponding to the terminal device.

The uplink resource randomization rule is a specific rule of the terminal device, and the uplink resource randomization rule may include a randomization rule of a demodulation reference signal DMRS sequence used by the terminal device.

403: The network device sends the first indication information to the terminal device.

Optionally, a sequence of performing step 401, step 402, and step 403 is not limited. For example, step 402 and step 403 may be performed first, and then step 401 is performed, or step 401 and step 403 may be performed at the same time. This is not listed one by one herein.

404: The terminal device determines, based on the resource configuration information and a preset randomization rule, an uplink resource used to transmit uplink data.

Optionally, the resource configuration information may be used to indicate an uplink resource used before the uplink resource randomization rule corresponding to the terminal device is enabled and/or an uplink resource used after the uplink resource randomization rule corresponding to the terminal device is disabled, that is, indicate a corresponding uplink resource when the uplink transmission resource randomization rule is disabled or is not enabled. Specifically, the terminal device may receive the resource configuration information sent by the network device, and may determine, based on the resource configuration information, the uplink resource used to transmit the uplink data, that is, the corresponding uplink resource when the uplink transmission resource randomization rule is disabled or is not enabled.

Specifically, after receiving the first indication information, the terminal device can determine, based on the resource configuration information and the preset randomization rule, the uplink resource used to transmit the uplink data. In other words, the uplink resource randomization rule may be a rule of determining, based on the resource configuration information and the preset randomization rule, the uplink resource used by the terminal device to transmit the uplink data. In other words, the resource configuration information is specific resource configuration information of the terminal device and/or the preset randomization rule is a specific rule of the terminal device. Optionally, the preset randomization rule may be preset. For example, the preset randomization rule may include a change rule for a parameter in the resource configuration information. For example, a CS of the DMRS indicated in the resource configuration information is 3, and the preset randomization rule indicates that the CS of the DMRS is subtracted by 2, so that the CS of the DMRS determined according to the resource configuration information and the preset randomization rule is 1, and further, the DMRS with the CS of 1 may be used to perform uplink data transmission, which are not listed one by one herein.

Optionally, the resource configuration information may be sent by the network device to the terminal device by using higher layer signaling, or may be sent to the terminal device by using physical layer signaling, or may be indicated to the terminal device by using both the higher layer signaling and the physical layer signaling. For example, the terminal device may receive the higher layer signaling, such as radio resource control (Radio Resource Control, RRC for short) signaling or medium access control (Medium Access Control, MAC for short) signaling, sent by the network device, and then determine the uplink resource based on the information about the DMRS sequence, the information about the time resource and/or the information about the frequency resource, and the like included in the higher layer signaling, that is, the corresponding uplink resource when the uplink transmission resource randomization rule is disabled or is not enabled. For another example, the terminal device may receive the physical layer signaling sent by the network device. The physical layer signaling may be carried by using a physical layer control channel, and then the terminal device determines the uplink resource based on the information about the DMRS sequence, the information about the time resource and/or the information about the frequency resource, and the like included in the physical layer signaling. For another example, the terminal device may receive the higher layer signaling and the physical layer signaling that are sent by the network device. Content indicated by the physical layer signaling may be in a one-to-one correspondence with uplink transmission resources configured by using the higher layer signaling. For example, the physical layer signaling includes 2-bit information, and may indicate four states in total, information about four different sets of uplink resources (for example, the DMRS sequence, the time resource, and/or the frequency resource) is configured by using the higher layer signaling, and the four states corresponding to the two bits in the physical layer signaling are in a one-to-one correspondence with the four sets of transmission resources configured by using the higher layer signaling. In this case, the terminal device may determine, based on the state indicated in the physical layer signaling, the resource configuration information from the transmission resource configured by using the higher layer signaling, to further determine the uplink resource. Alternatively, the terminal device may also determine the uplink resource in another manner. Details are not listed herein.

405: The terminal device transmits the uplink data by using the uplink resource.

Optionally, the network device may further generate second indication information, and may send the second indication information to the terminal device. The second indication information may be used to indicate to disable the uplink resource randomization rule corresponding to the terminal device. Further, the terminal device may receive the second indication information sent by the network device, then determine, based on the second indication information, a second uplink resource used to transmit the uplink data, that is, an uplink resource obtained after the uplink resource randomization rule is disabled, and transmit the uplink data by using the second uplink resource.

Optionally, the first indication information and/or the second indication information may be physical layer signaling, for example, the network device may send the first indication information and/or the second indication information by using the physical layer control channel. Alternatively, the first indication information and/or the second indication information may be higher layer signaling, for example, the network device may send the first indication information and/or the second indication information by using the RRC signaling or the MAC signaling. Further optionally, the first indication information and the second indication information may be sent by using different messages, or may be sent by using a same message. For example, the first indication information and the second indication information may be bit information, for example, may be 1-bit information. Corresponding to the first indication information, when a value of the bit is 1, it indicates that when transmitting the uplink data on the uplink resource, the terminal device needs to transmit the uplink data by using a randomized uplink resource, to indicate to enable the uplink resource randomization rule corresponding to the terminal device. Corresponding to the second indication information, when a value of the bit is 0, it indicates that when transmitting the uplink data on the uplink resource, the terminal device does not need to consider randomization, and may indicate to disable the uplink resource randomization rule corresponding to the terminal device.

Specifically, after receiving the second indication information, the terminal device may determine the second uplink resource based on the resource configuration information. In this way, the terminal device can determine, through one piece of resource configuration information, an uplink resource for enabling (with reference to the preset randomization rule) and an uplink resource for disabling the uplink resource randomization rule corresponding to the terminal device, to transmit the uplink data, thereby reducing overheads.

Optionally, the information about the DMRS sequence includes at least one of the following: a DMRS base sequence, a comb pattern of the DMRS sequence, and a CS of the DMRS sequence. Alternatively, the DMRS base sequence, the comb pattern of the DMRS sequence, and/or the CS of the DMRS sequence may be preconfigured, for example, may be obtained by using at least one of the following: the higher layer signaling, the MAC signaling, and the physical layer signaling. Therefore, the terminal device may determine a DMRS sequence based on the DMRS base sequence, the comb pattern, and the CS. Further optionally, randomization of the DMRS sequence includes at least one of the following: randomization of the DMRS base sequence, randomization of the comb pattern of the DMRS sequence, and randomization of the CS of the DMRS sequence. Further optionally, the resource configuration information may further include period information corresponding to the randomization rule, or period information corresponding to the randomization rule may be preset.

Optionally, the uplink resource randomization rule may be associated with an identifier of the terminal device, that is, may be a specific randomization rule of the terminal device, or the uplink resource randomization rule may be associated with an identifier of the terminal device and a time unit in which the terminal device transmits the uplink data, or the uplink resource randomization rule may be associated with an identifier of the terminal device and a quantity of times the terminal device repeatedly transmits the uplink data.

In this application, the identifier of the terminal device may be a cell radio network temporary identifier (Cell Radio Network Temporary Identifier, C-RNTI) corresponding to the terminal device. Further optionally, the C-RNTI may be configured by the network device for the terminal device. For example, the time unit in which the terminal device transmits the uplink data may be represented as index information corresponding to the time unit, and the index information may include at least one of the following: a system frame number (System Frame Number, SFN), a subframe index, a slot index, and a mini-slot index. The index information corresponding to the time unit may alternatively be represented in another form. This is not specifically limited. The uplink resource randomization rule may be associated with the quantity of times the terminal device repeatedly transmits the uplink data. The quantity of repeated transmissions herein may be specifically represented as an ordinal number of a transmission in the process of repeatedly transmitting the uplink data. For example, if a terminal device repeatedly transmits the uplink data for three times, the three repeated transmissions may be respectively represented as the first transmission, the second transmission, and the third transmission.

For example, uplink resource randomization includes the randomization of the DMRS base sequence. The network device may send the resource configuration information to the terminal device by using the higher layer signaling, such as the RRC signaling, and/or the physical layer signaling. The resource configuration information may indicate the DMRS sequence. The DMRS sequence indicated by the resource configuration information may be a DMRS sequence used by the terminal device before the uplink resource randomization rule is enabled or after the uplink resource randomization rule is disabled (that is, the uplink resource randomization is not considered). After the uplink resource randomization rule is enabled, for example, the terminal device receives the first indication information, and performs uplink resource randomization through the resource configuration information with reference to the preset randomization rule. For example, the resource configuration information indicates a DMRS 0, and the preset randomization rule indicates the terminal device to use T as a period, to transmit the uplink data at T1, T2, T3, T4, and moments corresponding to all periods respectively by using the DMRS 0, a DMRS 1, a DMRS 2, and a DMRS 3. If the terminal device determines to disable the uplink resource randomization rule (that is, the uplink resource randomization is not considered), for example, determines, based on the second indication information, to disable the uplink resource randomization rule, the terminal device transmits the uplink data at moments T1+n^{∗}T, T2+n^{∗}T, T3+n^{∗}T, and T4+n^{∗}T, and corresponding DMRS base sequences may all be the DMRS 0. On the other hand, if the terminal device determines to enable the uplink resource randomization rule, for example, determines, based on the first indication information, to enable the uplink resource randomization rule, the terminal device transmits the uplink data at the moments T1+n^{∗}T, T2+n^{∗}T, T3+n^{∗}T, and T4+n^{∗}T, and used DMRS base sequences may be respectively the DMRS 0, the DMRS 1, the DMRS 2, and the DMRS 3.

For a same terminal device, moments (time units) corresponding to different DMRS sequences used by the terminal device may be indicated by the network device by using the resource configuration information, or may be indicated by using other information, or may be determined by the terminal device based on an uplink data transmission position. Moments corresponding to DMRS sequences used by different terminal devices may be different (for example, the uplink resource randomization rule is associated with the identifier of the terminal device and the time unit for transmitting the uplink data). Further optionally, different transmission moments may also correspond to different quantities of repeated transmissions (that is, the uplink resource randomization rule may be associated with the identifier of the terminal device and the quantity of repeated transmissions of the uplink data). For example, the network device configures the terminal device to repeatedly transmit a same data packet for four times, and the four transmissions may correspond to different DMRS base sequences.

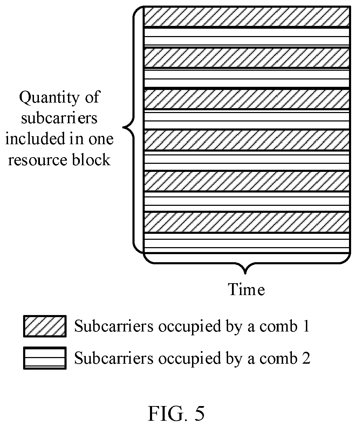

For another example, the uplink resource randomization includes randomization of a comb corresponding to the DMRS. The network device may send the resource configuration information to the terminal device, to configure the terminal device to use different comb patterns when transmitting the uplink data at different moments. That a resource block (Resource Block, RB for short) includes 12 subcarriers in frequency is used as an example. Duration corresponding to the RB in time may be one OFDM symbol, or 1 ms, or 0.5 ms, or duration corresponding to one time unit, or the like. The time unit is described above, and is not limited in this application. It is assumed that a system supports the following DMRS comb pattern, as shown in FIG. 5. The system includes two combs in total. In one RB, it is assumed that an odd-numbered subcarrier, for example, the first subcarrier, the third subcarrier, ..., and the eleventh subcarrier, included in the RB is a subcarrier included in a comb 1, and an even-numbered subcarrier, for example, the second subcarrier, the fourth subcarrier, ..., and the twelfth subcarrier included in the RB is a subcarrier included in a comb 2. It should be understood that FIG. 5 is merely an example of subcarriers on which different DMRS sequence combs are located, and does not indicate that a DMRS sequence needs to occupy all frequency resources included in the time, that is, the DMRS may occupy some frequency resources in the time. For example, assuming that a time range in FIG. 5 includes seven OFDM symbols, for a given subcarrier (which may be any one of the first subcarrier to the twelfth subcarrier), the time range may include seven resource elements (Resource Elements, RE for short). Each RE may carry a DMRS, or may carry a modulated data symbol, or may carry a data symbol used for channel measurement, for example, a sounding reference signal (Sounding Reference Signal, SRS for short). In this case, the DMRS sequence may occupy only one or more of the seven REs. This is not limited in this application. It should be understood that not using a comb pattern may also be a transmission manner corresponding to the DMRS. For example, FIG. 5 is still used as an example. If the comb pattern is not used, subcarriers on which an uplink DMRS transmitted by the terminal device is located may be all subcarriers included in the RB. Therefore, the terminal device may determine, based on the resource configuration information and the preset randomization rule, to use different combs (including not using a comb) when transmitting the uplink data at different moments. For example, the resource configuration information includes the basic DMRS sequence and a comb pattern used by the basic DMRS sequence, for example, a comb 1. Assuming that there may be at least three comb patterns corresponding to the DMRS sequence, the preset randomization rule may indicate the terminal device to sequentially use the comb 1, a comb 2, and a comb 0. After receiving the first indication information, the terminal device may transmit the uplink data by using a DMRS sequence corresponding to the comb 1, transmit the uplink data by using a DMRS sequence corresponding to the comb 2 next time, transmit the uplink data by using a DMRS sequence corresponding to the comb 0 next time, transmit the uplink data by using the DMRS sequence corresponding to the comb 1 next time, and so on, until the uplink resource randomization rule is disabled. Herein, the uplink resource indicated by the resource configuration information may be understood as an uplink resource used by the terminal device to transmit the uplink data before the terminal device enables the uplink resource randomization rule or after the terminal device disables the uplink resource randomization rule (that is, the uplink resource randomization is not considered).

Optionally, the data transmission may also be periodic. For details, refer to related descriptions of the foregoing periodic transmission of the DMRS base sequence randomization. Details are not described herein again.

The preset randomization rule may be predefined, or may be sent by the network device to the terminal device by using static signaling, semi-static signaling, or dynamic signaling, or the like. This is not limited in this application.

For another example, the uplink resource randomization includes randomization of the CS corresponding to the DMRS. The network device may send the resource configuration information to the terminal device, to configure DMRSs that are used by the terminal device to transmit the uplink data at different moments. DMRS base sequences corresponding to the DMRSs may be the same and the DMRSs may use a same comb pattern, but CSs corresponding to the DMRSs are different. Optionally, the network device may indicate, by using the resource configuration information, the CSs corresponding to the DMRSs used by the terminal device to transmit the uplink data at different moments. For example, it is assumed that the network device configures four CSs that are CS 1, CS 2, CS 3, and CS 4, and the resource configuration information may indicate an uplink resource used before the uplink resource randomization rule is enabled or a corresponding uplink resource after the uplink resource randomization rule is disabled. If the terminal device determines (for example, determines, through the first indication information) to enable the uplink resource randomization rule, the terminal device may determine, based on the preset randomization rule and the resource configuration information, the DMRS sequences used at different moments after the uplink resource randomization rule is enabled, or determine the CSs corresponding to the DMRS sequences used at different moments. For example, the terminal device may calculate the CS according to a randomization formula corresponding to the preset randomization rule. The randomization formula may include time indexes corresponding to different transmission moments. The time index may be an index corresponding to the time unit for transmitting the uplink data. As described above, the index may be an absolute index, or may be a relative index. This is not limited in this application. For example, assuming that the time unit in which the terminal device transmits the uplink data is one slot, the formula for calculating the CS corresponding to the DMRS may include an absolute index of the index. For example, a slot index number is determined by using a system frame number (System Frame Number, SFN for short); or may include an index number, for example, 0 to 19, included in a radio frame (Radio Frame, RF) of the index. In addition, when the terminal device transmits a same data packet such as a transmission block (Transmission Block, TB for short) at different moments in a manner of repeated transmission, the randomization formula may further include different quantities of repeated transmissions. For example, assuming that the terminal device repeatedly performs transmission for four times, CSs corresponding to DMRSs used in at least two of the first transmission, the second transmission, the third transmission, and the fourth transmission are different. For example, assuming that two DMRS sequences are generated based on a same DMRS base sequence, but correspond to different cyclic shifts CS, in a process of generating the cyclic shifts, if the cyclic shifts may be determined based on a pseudo-random sequence (Pseudo-random Sequence), the pseudo-random sequence may include the identifier of the terminal device, and further optionally, may further include the quantity of repeated transmissions and/or the index information of the time unit. The identifier of the terminal device herein may be an absolute identifier corresponding to the terminal device, for example, the foregoing C-RNTI, or may be a relative identifier corresponding to the terminal device. For example, when a plurality of terminal devices share a same time-frequency resource, the plurality of terminal devices may have relative identifiers, for example, if four terminal devices share a same time-frequency resource, relative identifiers corresponding to the four terminal devices may be represented by 0, 1, 2, and 3.

Further optionally, if different terminal devices share a same time-frequency resource, DMRS sequences configured by the network device for the different terminal devices may be different. Optionally, that the DMRS sequences are different may indicate that at least one of the following is different: DMRS base sequences are different, CSs corresponding to the DMRS sequences are different, or comb patterns corresponding to the DMRS sequences are different.

Further optionally, the network device may determine, based on a transmission load status, a channel quality status, and the like, to enable/disable the uplink resource randomization rule. For example, when a load is greater than a first load threshold, or a channel quality is less than a first quality threshold, the network device sends the first indication information to the terminal device. Further optionally, when the load is less than a second load threshold, or the channel quality is greater than a second quality threshold, the second indication information is sent to the terminal device. The foregoing thresholds may be preset, the first load threshold is greater than or equal to the second load threshold, and the first quality threshold is less than or equal to the second quality threshold.

In this embodiment of the present invention, the terminal device may determine, based on the indication information, whether to transmit the uplink data by using the randomized uplink resource. If the terminal device determines to transmit the uplink data by using the randomized uplink resource, the terminal device may introduce randomization to the uplink resource, so that DMRS sequence correlation characteristics of different terminal devices sharing a time-frequency resource are averaged (for example, when the uplink resource is a DMRS), and/or different terminal devices use a shared time-frequency resource only at some time-frequency locations (for example, when the uplink resource includes a time resource and/or a frequency resource), thereby improving data transmission performance of different terminal devices, and ensuring a transmission requirement of a service such as URLLC. Further, considering that the randomized uplink resource is not required in any scenario, for example, when the network device serves a relatively small quantity of terminal devices, different terminal devices may be distinguished in an orthogonal time resource manner and/or an orthogonal frequency resource manner. In this case, the uplink resource does not need to be randomized to ensure uplink data transmission performance of different terminal devices. Therefore, data transmission flexibility may be improved by disabling randomization (for example, it may be determined, through the first indication information and/or the second indication information, whether the uplink resource randomization needs to be enabled), and an uplink resource for enabling and an uplink resource for disabling the uplink resource randomization rule corresponding to the terminal device can be determined through resource configuration information (with reference to a preset randomization rule), to transmit the uplink data, thereby reducing overheads.

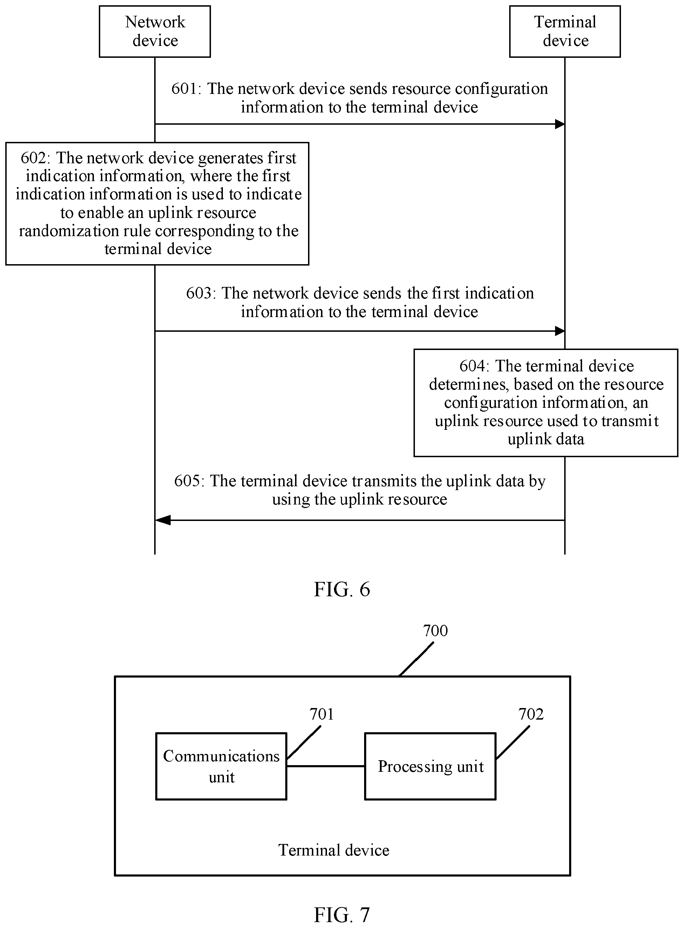

FIG. 6 is a schematic flowchart of still another data transmission method according to an embodiment of the present invention. Specifically, as shown in FIG. 6, the data transmission method in this embodiment of the present invention may include the following steps.

601: A network device sends resource configuration information to a terminal device.

The resource configuration information, namely, the foregoing first resource configuration information, may be used to indicate an uplink resource used by the terminal device after the terminal device enables an uplink resource randomization rule. For example, the first resource configuration information may include information about a DMRS sequence used for uplink data demodulation. Optionally, the first resource configuration information may further include information about a time resource used for uplink data transmission and/or information about a frequency resource used for uplink data transmission.

602: The network device generates first indication information, where the first indication information is used to indicate to enable an uplink resource randomization rule corresponding to the terminal device.

The uplink resource randomization rule is a specific rule of the terminal device, and the uplink resource randomization rule may include a randomization rule of a demodulation reference signal DMRS sequence used by the terminal device.

603: The network device sends the first indication information to the terminal device.

Optionally, a sequence of performing step 601, step 602, and step 603 is not limited. For example, step 602 and step 603 may be performed first, and then step 601 is performed, or step 601 and step 603 may be performed at the same time, which are not listed one by one herein.

604: The terminal device determines, based on the resource configuration information, an uplink resource used to transmit uplink data.

Specifically, the terminal device may receive the first resource configuration information sent by the network device, and may determine, based on the first resource configuration information, a first uplink resource used to transmit the uplink data. Therefore, after receiving the first indication information, the terminal device can directly determine, based on the first resource configuration information, the first uplink resource used to transmit the uplink data. In other words, the uplink resource randomization rule may be a rule of determining, based on the resource configuration information, the uplink resource used by the terminal device to transmit the uplink data, in other words, the first resource configuration information is specific resource configuration information of the terminal device.

605: The terminal device transmits the uplink data by using the uplink resource.

Optionally, the network device may further generate second indication information, and may send the second indication information to the terminal device. The second indication information may be used to indicate to disable the uplink resource randomization rule corresponding to the terminal device. Further, the terminal device may receive the second indication information sent by the network device, then determine, based on the second indication information, a second uplink resource used to transmit the uplink data, that is, an uplink resource obtained after the uplink resource randomization rule is disabled, and transmit the uplink data by using the second uplink resource.

Optionally, the first indication information and/or the second indication information may be physical layer signaling, or may be higher layer signaling. The first indication information and the second indication information may be sent by using different messages, or may be sent by using a same message. For details, refer to related descriptions in the foregoing embodiment. Details are not described herein again.

Further, the network device may further send second resource configuration information (corresponding to the third resource configuration information in the embodiment in FIG. 3) to the terminal device, and the terminal device may receive the second resource configuration information. The second resource configuration information may be used to indicate an uplink resource used before the uplink resource randomization rule corresponding to the terminal device is enabled and/or an uplink resource used after the uplink resource randomization rule corresponding to the terminal device is disabled, that is, indicate an uplink resource used by the terminal device when the uplink resource randomization rule corresponding to the terminal device is disabled or is not enabled. The second resource configuration information may include information about a DMRS sequence used for uplink data demodulation, information about a time resource used for uplink data transmission, and/or information about a frequency resource used for uplink data transmission. Therefore, after receiving the second indication information, the terminal device may directly determine the second uplink resource based on the second resource configuration information. Therefore, the terminal device can quickly determine, through different resource configuration information, that is, the first resource configuration information and the second resource configuration information, an uplink resource for enabling the uplink resource randomization rule and an uplink resource for disabling the uplink resource randomization rule, to transmit the uplink data, or indicate an uplink resource used by the terminal device when the uplink resource randomization rule corresponding to the terminal device is not enabled, thereby improving resource determining efficiency.

Optionally, the first resource configuration information and/or the second resource configuration information may be sent by the network device to the terminal device by using the higher layer signaling, or may be sent to the terminal device by using the physical layer signaling, or may be indicated to the terminal device by using both the higher layer signaling and the physical layer signaling. For details, refer to related descriptions in the foregoing embodiment. Details are not described herein again.

Optionally, the information about the DMRS sequence includes at least one of the following: a DMRS base sequence, a comb pattern of the DMRS sequence, and a CS of the DMRS sequence. Alternatively, the DMRS base sequence, the comb pattern of the DMRS sequence, and/or the CS of the DMRS sequence may be preconfigured. Therefore, the terminal device may determine a DMRS sequence based on the DMRS base sequence, the comb pattern, and the CS. Further optionally, randomization of the DMRS sequence includes at least one of the following: randomization of the DMRS base sequence, randomization of the comb pattern of the DMRS sequence, and randomization of the CS of the DMRS sequence. Further optionally, the resource configuration information may further include period information corresponding to the randomization rule, or period information corresponding to the randomization rule may be preset.

Optionally, the uplink resource randomization rule may be associated with an identifier of the terminal device, that is, may be a specific randomization rule of the terminal device, or the uplink resource randomization rule may be associated with an identifier of the terminal device and a time unit in which the terminal device transmits the uplink data, or the uplink resource randomization rule may be associated with an identifier of the terminal device and a quantity of times the terminal device repeatedly transmits the uplink data.

For example, uplink resource randomization includes the randomization of the DMRS base sequence. The network device may send the resource configuration information to the terminal device by using the higher layer signaling, such as RRC signaling, and/or the physical layer signaling, to configure the terminal device to transmit, at different moments after enabling the uplink resource randomization rule, a DMRS base sequence corresponding to the uplink data. For example, when the network device separately configures, by using the RRC signaling, the terminal device to transmit the uplink data at a moment T1, a moment T2, a moment T3, and a moment T4, corresponding DMRS base sequences are respectively a DMRS 1, a DMRS 2, a DMRS 3, and a DMRS 4, that is, the resource configuration information includes information about the DMRS 1, the DMRS 2, the DMRS 3, and the DMRS 4 respectively corresponding to the moment T1, the moment T2, the moment T3, and the moment T4. For ease of description, it is assumed that a sequence set formed by the DMRS 1/the DMRS 2/the DMRS 3/the DMRS 4 may be considered as a DMRS base sequence frequency hopping pattern (pattern). In this example, the resource configuration information may be understood as an uplink resource used to indicate the terminal device to enable the uplink resource randomization rule, and the DMRS base sequence frequency hopping pattern may be understood as an uplink resource used by the terminal device to transmit the uplink data when the uplink resource randomization rule is enabled. Optionally, the pattern may appear periodically. For example, it is assumed that a period corresponding to the DMRS base sequence frequency hopping pattern is T. When the terminal device transmits the uplink data at moments T1+n^{∗}T, T2+n^{∗}T, T3+n^{∗}T, and T4+n^{∗}T, corresponding DMRS base sequences are respectively the DMRS 1, the DMRS 2, the DMRS 3, and the DMRS 4. For a same terminal device, moments corresponding to different DMRS sequences used by the terminal device may be indicated by the network device by using the resource configuration information, or may be indicated by using other information. Moments corresponding to DMRS sequences used by different terminal devices may be different, different transmission moments may also correspond to different quantities of repeated transmissions, and the like. For details, refer to related descriptions in the foregoing embodiment. Details are not described herein again.

For another example, the uplink resource randomization includes randomization of a comb corresponding to the DMRS. The network device may send the resource configuration information to the terminal device, to configure the terminal device to use different comb patterns to transmit the uplink data at different moments after enabling the uplink resource randomization rule. As shown in FIG. 5, it is assumed that a system supports the following DMRS comb pattern. In one RB, an odd-numbered subcarrier, for example, the first subcarrier, the third subcarrier, ..., and the eleventh subcarrier, included in the RB is a subcarrier included in a comb 1, and an even-numbered subcarrier, for example, the second subcarrier, the fourth subcarrier, ..., and the twelfth subcarrier included in the RB is a subcarrier included in a comb 2. Therefore, the terminal device may determine, based on the resource configuration information, for example, the resource configuration information includes a basic DMRS sequence, and information about a comb 1, a comb 2, a comb 0 (not using a comb), and a comb 1 respectively corresponding to the moment T1, the moment T2, the moment T3, and the moment T4, to use different combs when transmitting the uplink data at different moments, for example, respectively use DMRSs corresponding to the comb 1, the comb 2, the comb 0, and the comb 1 at the moment T1, the moment T2, the moment T3, and the moment T4. Optionally, the data transmission may also be periodic. For details, refer to related descriptions of the foregoing periodic transmission of the DMRS base sequence randomization. Details are not described herein again.

For another example, the uplink resource randomization includes randomization of the CS corresponding to the DMRS. The network device may send the resource configuration information to the terminal device, to configure DMRSs that are used by the terminal device to transmit the uplink data at different moments after enabling the uplink resource randomization rule. DMRS base sequences corresponding to the DMRSs may be the same and the DMRSs may use a same comb pattern, but CSs corresponding to the DMRSs are different. Optionally, the network device may indicate, by using the resource configuration information, the CSs corresponding to the DMRSs used by the terminal device to transmit the uplink data at different moments after the uplink resource randomization rule is enabled. For example, it is assumed that the network device configures four CSs that are CS 1, CS 2, CS 3, and CS 4, and if the terminal device determines (for example, determines, through the first indication information) to enable the uplink resource randomization rule, the terminal device may determine, based on an indication of the resource configuration information, the CSs used to transmit the uplink data at different moments. Further optionally, the terminal device may periodically use different CSs to transmit the uplink data. Optionally, if the terminal device determines (for example, through the second indication information) not to enable the uplink resource randomization rule, in one manner, the terminal device may still determine, based on some of information in the resource configuration information, the CSs used to transmit the uplink data. In this case, some of information included in the resource configuration information needs to be used to indicate an uplink resource used when the uplink resource randomization rule is not enabled. For example, as described above, when determining not to enable the uplink resource randomization rule, the terminal device may use one CS, for example, the CS 1, included in the resource configuration information, for an uplink resource used for uplink data transmission. Alternatively, in another manner, the terminal device determines, based on other configuration information different from the resource configuration information, an uplink resource used when the uplink resource randomization rule is not enabled. The other configuration information herein may be used to indicate an uplink resource used by the terminal device before the terminal device enables the uplink resource randomization rule or an uplink resource used after the terminal device disables the uplink resource randomization rule (for example, the other configuration information may be the second resource configuration information in this embodiment).

In this embodiment of the present invention, the terminal device may determine, based on the indication information, whether to transmit the uplink data by using the randomized uplink resource. If the terminal device determines to transmit the uplink data by using the randomized uplink resource, the terminal device may introduce randomization to the uplink resource, so that DMRS sequence correlation characteristics of different terminal devices sharing a time-frequency resource are averaged (for example, when the uplink resource is a DMRS), and/or different terminal devices use a shared time-frequency resource only at some time-frequency locations (for example, when the uplink resource includes a time resource and/or a frequency resource), thereby improving data transmission performance of different terminal devices, and ensuring a transmission requirement of a service such as URLLC. Further, considering that the randomized uplink resource is not required in any scenario, for example, when the network device serves a relatively small quantity of terminal devices, different terminal devices may be distinguished in an orthogonal time resource manner and/or an orthogonal frequency resource manner. In this case, the uplink resource does not need to be randomized to ensure uplink data transmission performance of different terminal devices. Therefore, data transmission flexibility may be improved by disabling randomization, and an uplink resource for enabling and an uplink resource for disabling the uplink resource randomization rule can be quickly determined based on different resource configuration information to transmit the uplink data, thereby improving resource determining efficiency.

It should be noted that this application is also applicable to a scenario in which terminal devices do not share a time-frequency resource. To be specific, on a same time-frequency resource, only one terminal device performs uplink data transmission. In this case, according to the method in this application, the uplink resource randomization rule of the terminal device is enabled, so that interference between the terminal device and a neighboring cell during uplink data transmission can be reduced, thereby ensuring uplink data transmission efficiency of the terminal device. Optionally, if a network device serving the terminal device and another neighboring network device can reduce, in a specific planning manner, interference between uplink data transmission of terminal devices served by different network devices, the network device may disable the uplink resource randomization rule corresponding to the terminal device. On the contrary, if relatively strong interference still exists between uplink data transmission of terminal devices served by different network devices, the network device may enable the uplink resource randomization rule corresponding to the terminal device, so that interference between uplink data transmission of terminal devices served by different network devices is randomized.

It should be noted that, in this application, the DMRS sequence used for uplink data transmission may be jointly determined by using the DMRS base sequence and the DMRS cyclic shift. Optionally, a frequency resource occupied by the DMRS sequence is further related to the comb pattern of the DMRS sequence.

The foregoing method embodiments are descriptions of examples of the data transmission method in this application. Each embodiment is described with emphasis. For a part that is not described in detail in an embodiment, refer to related descriptions in other embodiments.

FIG. 7 is a possible schematic structural diagram of the terminal device in the foregoing embodiments. Referring to FIG. 7, the terminal device 700 may include a communications unit 701 and a processing unit 702. These units may perform corresponding functions of the terminal device in the foregoing method examples. For example, the communications unit 701 is configured to receive first indication information from a network device, where the first indication information is used to indicate to enable an uplink resource randomization rule corresponding to the terminal device, the uplink resource randomization rule is a specific rule of the terminal device, and the uplink resource randomization rule includes a randomization rule of a demodulation reference signal DMRS sequence used by the terminal device; the processing unit 702 is configured to determine, based on the first indication information, a first uplink resource used to transmit uplink data; and the communications unit 701 is further configured to transmit the uplink data by using the first uplink resource.

Optionally, the communications unit 701 is further configured to receive second indication information from the network device, where the second indication information is used to indicate to disable the uplink resource randomization rule corresponding to the terminal device.

The processing unit 702 is further configured to determine, based on the second indication information, a second uplink resource used to transmit uplink data.

The communications unit 701 is further configured to transmit the uplink data by using the second uplink resource.

Optionally, the communications unit 701 is further configured to receive first resource configuration information from the network device, where the first resource configuration information is used to indicate an uplink resource used by the terminal device after the terminal device enables the uplink resource randomization rule, and the first resource configuration information includes at least one of information about a DMRS sequence used for uplink data demodulation, information about a time resource used for uplink data transmission, and information about a frequency resource used for uplink data transmission.

The processing unit 702 is specifically configured to determine, based on the first resource configuration information, the first uplink resource used to transmit the uplink data.

Optionally, the communications unit 701 is further configured to receive second resource configuration information from the network device, where the second resource configuration information includes at least one of information about a DMRS sequence used for uplink data demodulation, information about a time resource used for uplink data transmission, and information about a frequency resource used for uplink data transmission.

The processing unit 702 is specifically configured to determine, based on the second resource configuration information and a preset randomization rule, the first uplink resource used to transmit the uplink data.

Further optionally, the second resource configuration information is used to indicate an uplink resource used by the terminal device before the terminal device enables the uplink resource randomization rule and/or an uplink resource used by the terminal device after the terminal device disables the uplink resource randomization rule.

Optionally, the communications unit 701 is further configured to receive third resource configuration information from the network device, where the third resource configuration information is used to indicate an uplink resource used by the terminal device after the terminal device disables the uplink resource randomization rule, and the third resource configuration information includes at least one of information about a DMRS sequence used for uplink data demodulation, information about a time resource used for uplink data transmission, and information about a frequency resource used for uplink data transmission.

The processing unit 702 is specifically configured to determine, based on the third resource configuration information, the second uplink resource used to transmit the uplink data.

Optionally, the information about the DMRS sequence includes at least one of the following: a DMRS base sequence, a comb pattern of the DMRS sequence, and a cyclic shift of the DMRS sequence.

Optionally, randomization of the DMRS sequence includes at least one of the following: randomization of the DMRS base sequence, randomization of the comb pattern of the DMRS sequence, and randomization of the cyclic shift of the DMRS sequence.

Optionally, the uplink resource randomization rule is associated with an identifier of the terminal device, or the uplink resource randomization rule is associated with an identifier of the terminal device and a time unit in which the terminal device transmits the uplink data, or the uplink resource randomization rule is associated with an identifier of the terminal device and a quantity of times the terminal device repeatedly transmits the uplink data.

Optionally, transmission of the uplink data is performed by the terminal device based on grant free scheduling; and the grant free scheduling is implemented based on a semi-persistent scheduling SPS mechanism, or is implemented based on higher layer signaling configuration, or is implemented based on both higher layer signaling configuration and a physical layer signaling indication.

It should be noted that, in this embodiment of the present invention, unit division is an example, and is merely a logical function division. In actual implementation, another division manner may be used. Functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

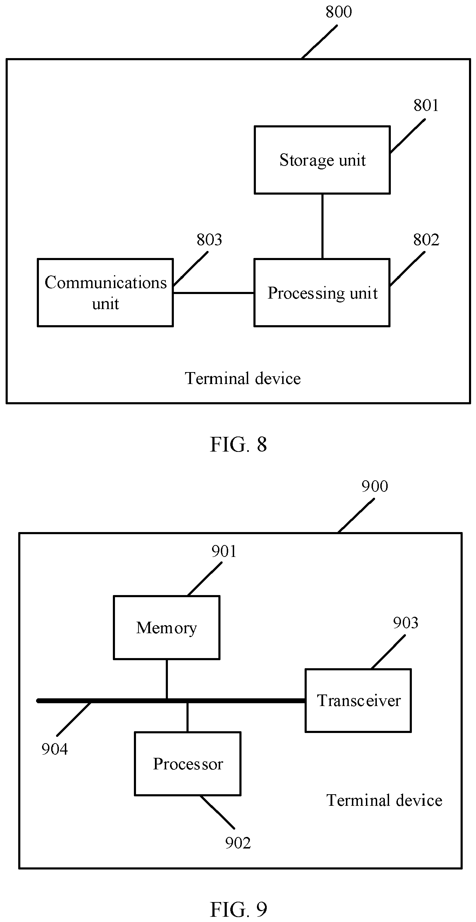

When the integrated unit is used, FIG. 8 is another possible schematic structural diagram of the terminal device in the foregoing embodiments. As shown in FIG. 8, the terminal device 800 may include a processing unit 802 and a communications unit 803. The processing unit 802 may be configured to control and manage an action of the terminal device. For example, the processing unit 802 is configured to support the terminal device in performing the process 303 in FIG. 3, the process 404 in FIG. 4, the process 604 in FIG. 6, and/or another process of the technology described in this specification. The communications unit 803 may be configured to support the terminal device in communicating with another network entity, for example, communicating with the network entities such as a network device shown in FIG. 3 to FIG. 6. For example, the communications unit 803 is configured to support the network device in performing the processes 302 and 304 in FIG. 3, the processes 401, 403, and 405 in FIG. 4, and the processes 601, 603, and 605 in FIG. 6. The terminal device may further include a storage unit 801, configured to store program code and data of the terminal device.

The processing unit 802 may be a processor or a controller, for example, may be a central processing unit (Central Processing Unit, CPU for short), a general-purpose processor, a digital signal processor (digital signal processor, DSP for short), an application-specific integrated circuit (application-specific integrated circuit, ASIC for short), a field programmable gate array (field programmable gate array, FPGA for short) or another programmable logic device, a transistor logic device, or a hardware component, or any combination thereof. The processor unit may implement or execute various example logical blocks, modules, and circuits described with reference to content disclosed in this application. The processor may also be a combination implementing a computing function, for example, a combination of one or more microprocessors, or a combination of a DSP and a microprocessor. The communications unit 803 may be a transceiver. The storage unit 801 may be a memory.

As shown in FIG. 9, in another embodiment, the terminal device 900 may include a processor 902, a transceiver 903, and a memory 901. The transceiver 903, the processor 902, and the memory 901 are connected to each other. The processor may perform a function of the foregoing processing unit 802, the transceiver may have a function similar to that of the foregoing communications unit 803, and the memory may have a function similar to that of the foregoing storage unit 801. The transceiver 903 may include a receiver and a transmitter, or may be obtained by integrating a receiver and a transmitter. This is not limited in this application. Optionally, the terminal device 900 may further include a bus 904, and the bus 904 may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of representation, only one thick line is used to represent the bus in FIG. 9, but this does not mean that there is only one bus or only one type of bus.

It should be understood that, in this application, units (such as the communications unit and the processing unit) or components (such as the transceiver and the processor) in the terminal device may jointly implement steps or behavior of the terminal device in some or all of the embodiments of this application, or may separately implement steps or behavior of the terminal device in any embodiment of this application. This is not limited in this application.

Method or algorithm steps described in combination with the content disclosed in this application may be implemented by hardware, or may be implemented by a processor by executing a software instruction. The software instruction may include a corresponding software module. The software module may be stored in a random access memory (random access memory, RAM for short), a flash memory, a read-only memory (read only memory, ROM for short), an erasable programmable read-only memory (erasable programmable ROM, EPROM for short), an electrically erasable programmable read-only memory (electrically ePROM, EEPROM for short), a register, a hard disk, a mobile hard disk, a compact disc read-only memory (CD-ROM), or any other form of storage medium well-known in the art. For example, a storage medium is coupled to the processor, so that the processor can read information from the storage medium and write information into the storage medium. Certainly, the storage medium may be a component of the processor. The processor and the storage medium may be located in an ASIC. In addition, the ASIC may be located in a terminal device. Certainly, the processor and the storage medium may exist in the terminal device as discrete components.

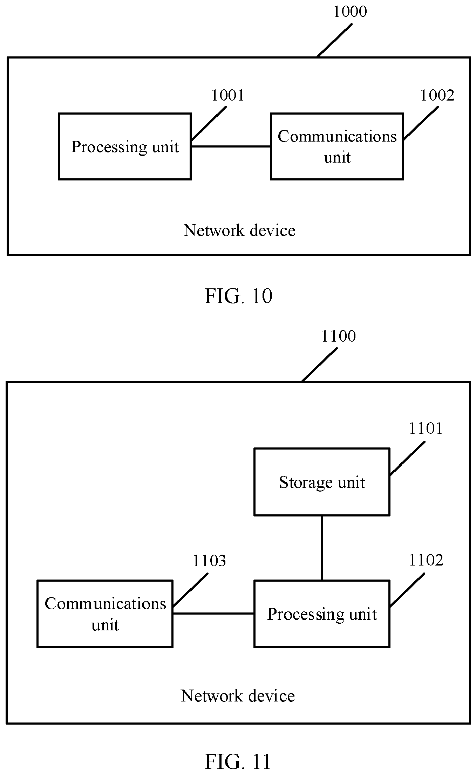

FIG. 10 is a possible schematic structural diagram of the network device in the foregoing embodiments. Referring to FIG. 10, the network device 1000 may include a processing unit 1001 and a communications unit 1002. These units may perform corresponding functions of the network device in the foregoing method examples. For example, the processing unit 1001 is configured to generate first indication information, where the first indication information is used to indicate to enable an uplink resource randomization rule corresponding to a terminal device, the uplink resource randomization rule is a specific rule of the terminal device, and the uplink resource randomization rule includes a randomization rule of a demodulation reference signal DMRS sequence used by the terminal device; and the communications unit 1002 is configured to send the first indication information to the terminal device.

Optionally, the processing unit 1001 is further configured to generate second indication information, where the second indication information is used to indicate to disable the uplink resource randomization rule corresponding to the terminal device.

The communications unit 1002 is further configured to send the second indication information to the terminal device.

Optionally, the communications unit 1002 is further configured to send first resource configuration information to the terminal device, where the first resource configuration information is used to indicate an uplink resource used by the terminal device after the terminal device enables the uplink resource randomization rule, and the first resource configuration information includes at least one of information about a DMRS sequence used for uplink data demodulation, information about a time resource used for uplink data transmission, and information about a frequency resource used for uplink data transmission.

Optionally, the communications unit 1002 is further configured to send second resource configuration information to the terminal device, where the second resource configuration information includes at least one of information about a DMRS sequence used for uplink data demodulation, information about a time resource used for uplink data transmission, and information about a frequency resource used for uplink data transmission.

Optionally, the communications unit 1002 is further configured to send third resource configuration information to the terminal device, where the third resource configuration information is used to indicate an uplink resource used by the terminal device before the terminal device enables the uplink resource randomization rule and/or an uplink resource used by the terminal device after the terminal device disables the uplink resource randomization rule, and the third resource configuration information includes at least one of information about a DMRS sequence used for uplink data demodulation, information about a time resource used for uplink data transmission, and information about a frequency resource used for uplink data transmission.

Optionally, the information about the DMRS sequence includes at least one of the following: a DMRS base sequence, a comb pattern of the DMRS sequence, and a cyclic shift of the DMRS sequence.

Optionally, randomization of the DMRS sequence includes at least one of the following: randomization of the DMRS base sequence, randomization of the comb pattern of the DMRS sequence, and randomization of the cyclic shift of the DMRS sequence.

Optionally, the uplink resource randomization rule is associated with an identifier of the terminal device, or the uplink resource randomization rule is associated with an identifier of the terminal device and a time unit in which the terminal device transmits the uplink data, or the uplink resource randomization rule is associated with an identifier of the terminal device and a quantity of times the terminal device repeatedly transmits the uplink data.

It should be noted that, in this embodiment of the present invention, unit division is an example, and is merely a logical function division. In actual implementation, another division manner may be used. Functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is used, FIG. 11 is another possible schematic structural diagram of the network device in the foregoing embodiments. As shown in FIG. 11, the network device 1100 may include a processing unit 1102 and a communications unit 1103. The processing unit 1102 may be configured to control and manage an action of the network device. For example, the processing unit 1102 is configured to support the network device in performing the process 301 in FIG. 3, the process 402 in FIG. 4, the process 602 in FIG. 6, and/or another process of the technology described in this specification. The communications unit 1103 is configured to support the network device in communicating with another network entity, for example, communicating with the network entities such as a terminal device shown in FIG. 3 to FIG. 8. For example, the communications unit 1103 is configured to support the network device in performing the processes 302 and 304 in FIG. 3, the processes 401, 403, and 405 in FIG. 4, and the processes 601, 603, and 605 in FIG. 6. The network device may further include a storage unit 1101, configured to store program code and data of the network device.

The processing unit 1102 may be a processor or a controller, such as may be a CPU, a general purpose processor, a DSP, an ASIC, an FPGA, or another programmable logic device, a transistor logic device, a hardware component, or any combination thereof. The processor unit may implement or execute various example logical blocks, modules, and circuits described with reference to content disclosed in this application. The processor may also be a combination implementing a computing function, for example, a combination of one or more microprocessors, or a combination of a DSP and a microprocessor. The communications unit 1103 may be a transceiver. The storage unit 1101 may be a memory.

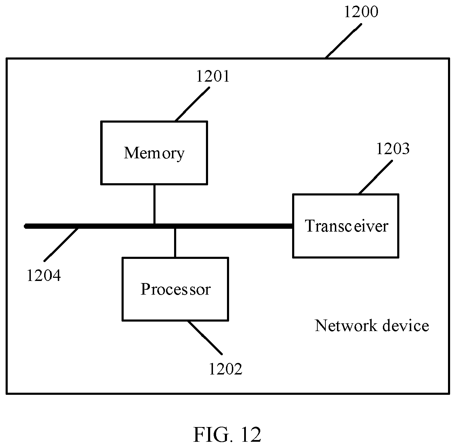

As shown in FIG. 12, in another embodiment, the network device 1200 may include a processor 1202, a transceiver 1203, and a memory 1201. The transceiver 1203, the processor 1202, and the memory 1201 are connected to each other. The processor may perform a function of the foregoing processing unit 1102, the transceiver may have a function similar to that of the foregoing communications unit 1103, and the memory may have a function similar to that of the foregoing storage unit 1101. The transceiver 1203 may include a receiver and a transmitter, or may be obtained by integrating a receiver and a transmitter. This is not limited in this application. Optionally, the network device 1200 may further include a bus 1204, and the bus 1204 may be a PCI bus, an EISA bus, or the like. The bus may be classified into an address bus, a data bus, a control bus, and the like. For ease of representation, only one thick line is used to represent the bus in FIG. 12, but this does not mean that there is only one bus or only one type of bus.

It should be understood that, in this application, units (such as the communications unit and the processing unit) or components (such as the transceiver and the processor) in the network device may jointly implement steps or behavior of the network device in some or all of the embodiments of this application, or may separately implement steps or behavior of the network device in any embodiment of this application. This is not limited in this application.

Method or algorithm steps described in combination with the content disclosed in this application may be implemented by hardware, or may be implemented by a processor by executing a software instruction. The software instruction may include a corresponding software module. The software module may be stored in a RAM, a flash memory, a ROM, an EPROM, an EEPROM, a register, a hard disk, a removable hard disk, a compact disc read-only memory, or any other form of storage medium well-known in the art. For example, a storage medium is coupled to the processor, so that the processor can read information from the storage medium and write information into the storage medium. Certainly, the storage medium may be a component of the processor. The processor and the storage medium may be located in an ASIC. In addition, the ASIC may be located in the network device. Certainly, the processor and the storage medium may exist in the network device as discrete components.

In an implementation process, the steps in the foregoing methods may be implemented by using a hardware integrated logical circuit in the processor, or by using instructions in a form of software. The steps of the method disclosed with reference to the embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should further be understood that the "first", "second", "third", and "fourth" and various digital numbers in this specification are merely for differentiation for ease of description, and are not intended to limit the scope of the embodiments of the present invention.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of the present invention.

A person of ordinary skill in the art may be aware that, in combination with illustrative logical blocks (illustrative logical block) described in the embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedure or functions according to the embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive solid state disk (SSD)), or the like.

## Claims

1. A data transmission method, comprising:
receiving, by a terminal device, first indication information from a network device, wherein the first indication information is used to indicate to enable an uplink resource randomization rule corresponding to the terminal device, the uplink resource randomization rule is a specific rule of the terminal device, and the uplink resource randomization rule comprises a randomization rule of a demodulation reference signal DMRS sequence used by the terminal device;
determining, by the terminal device based on the first indication information, a first uplink resource used to transmit uplink data; and
transmitting, by the terminal device, the uplink data by using the first uplink resource.

2. The method according to claim 1, wherein the method further comprises:
receiving, by the terminal device, second indication information from the network device, wherein the second indication information is used to indicate to disable the uplink resource randomization rule corresponding to the terminal device;
determining, by the terminal device based on the second indication information, a second uplink resource used to transmit uplink data; and
transmitting, by the terminal device, the uplink data by using the second uplink resource.

3. The method according to claim 1 or 2, wherein the method further comprises:
receiving, by the terminal device, first resource configuration information from the network device, wherein the first resource configuration information is used to indicate an uplink resource used by the terminal device after the terminal device enables the uplink resource randomization rule, and the first resource configuration information comprises at least one of information about a DMRS sequence used for uplink data demodulation, information about a time resource used for uplink data transmission, and information about a frequency resource used for uplink data transmission; and
the determining, by the terminal device, a first uplink resource used to transmit uplink data comprises:
determining, by the terminal device based on the first resource configuration information, the first uplink resource used to transmit the uplink data.

4. The method according to claim 1 or 2, wherein the method further comprises:
receiving, by the terminal device, second resource configuration information from the network device, wherein the second resource configuration information comprises at least one of information about a DMRS sequence used for uplink data demodulation, information about a time resource used for uplink data transmission, and information about a frequency resource used for uplink data transmission; and
the determining, by the terminal device, a first uplink resource used to transmit uplink data comprises:
determining, by the terminal device based on the second resource configuration information and a preset randomization rule, the first uplink resource used to transmit the uplink data.

5. The method according to claim 4, wherein the second resource configuration information is used to indicate an uplink resource used by the terminal device before the terminal device enables the uplink resource randomization rule and/or an uplink resource used by the terminal device after the terminal device disables the uplink resource randomization rule.

6. The method according to claim 2, wherein the method further comprises:
receiving, by the terminal device, third resource configuration information from the network device, wherein the third resource configuration information is used to indicate an uplink resource used by the terminal device after the terminal device disables the uplink resource randomization rule, and the third resource configuration information comprises at least one of information about a DMRS sequence used for uplink data demodulation, information about a time resource used for uplink data transmission, and information about a frequency resource used for uplink data transmission; and
the determining, by the terminal device, a second uplink resource used to transmit uplink data comprises:
determining, by the terminal device based on the third resource configuration information, the second uplink resource used to transmit the uplink data.

7. The method according to any one of claims 3 to 6, wherein the information about the DMRS sequence comprises at least one of the following: a DMRS base sequence, a comb pattern of the DMRS sequence, and a cyclic shift of the DMRS sequence.

8. The method according to any one of claims 1 to 7, wherein randomization of the DMRS sequence comprises at least one of the following: randomization of the DMRS base sequence, randomization of the comb pattern of the DMRS sequence, and randomization of the cyclic shift of the DMRS sequence.

9. The method according to any one of claims 1 to 8, wherein the uplink resource randomization rule is associated with an identifier of the terminal device, or the uplink resource randomization rule is associated with an identifier of the terminal device and a time unit in which the terminal device transmits the uplink data, or the uplink resource randomization rule is associated with an identifier of the terminal device and a quantity of times the terminal device repeatedly transmits the uplink data.

10. The method according to any one of claims 1 to 9, wherein transmission of the uplink data is performed by the terminal device based on grant free scheduling; and the grant free scheduling is implemented based on a semi-persistent scheduling SPS mechanism, or is implemented based on higher layer signaling configuration, or is implemented based on both higher layer signaling configuration and a physical layer signaling indication.

11. A data transmission method, comprising:
generating, by a network device, first indication information, wherein the first indication information is used to indicate to enable an uplink resource randomization rule corresponding to a terminal device, the uplink resource randomization rule is a specific rule of the terminal device, and the uplink resource randomization rule comprises a randomization rule of a demodulation reference signal DMRS sequence used by the terminal device; and
sending, by the network device, the first indication information to the terminal device.

12. The method according to claim 11, wherein the method further comprises:
generating, by the network device, second indication information, wherein the second indication information is used to indicate to disable the uplink resource randomization rule corresponding to the terminal device; and
sending, by the network device, the second indication information to the terminal device.

13. The method according to claim 11 or 12, wherein the method further comprises:
sending, by the network device, first resource configuration information to the terminal device, wherein the first resource configuration information is used to indicate an uplink resource used by the terminal device after the terminal device enables the uplink resource randomization rule, and the first resource configuration information comprises at least one of information about a DMRS sequence used for uplink data demodulation, information about a time resource used for uplink data transmission, and information about a frequency resource used for uplink data transmission.

14. The method according to claim 11 or 12, wherein the method further comprises:
sending, by the network device, second resource configuration information to the terminal device, wherein the second resource configuration information comprises at least one of information about a DMRS sequence used for uplink data demodulation, information about a time resource used for uplink data transmission, and information about a frequency resource used for uplink data transmission.

15. The method according to any one of claims 11 to 14, wherein the method further comprises:
sending, by the network device, third resource configuration information to the terminal device, wherein the third resource configuration information is used to indicate an uplink resource used by the terminal device before the terminal device enables the uplink resource randomization rule and/or an uplink resource used by the terminal device after the terminal device disables the uplink resource randomization rule, and the third resource configuration information comprises at least one of the information about the DMRS sequence used for uplink data demodulation, the information about the time resource used for uplink data transmission, and the information about the frequency resource used for uplink data transmission.

16. The method according to any one of claims 13 to 15, wherein the information about the DMRS sequence comprises at least one of the following: a DMRS base sequence, a comb pattern of the DMRS sequence, and a cyclic shift of the DMRS sequence.

17. The method according to any one of claims 11 to 16, wherein randomization of the DMRS sequence comprises at least one of the following: randomization of the DMRS base sequence, randomization of the comb pattern of the DMRS sequence, and randomization of the cyclic shift of the DMRS sequence.

18. The method according to any one of claims 11 to 17, wherein the uplink resource randomization rule is associated with an identifier of the terminal device, or the uplink resource randomization rule is associated with an identifier of the terminal device and a time unit in which the terminal device transmits the uplink data, or the uplink resource randomization rule is associated with an identifier of the terminal device and a quantity of times the terminal device repeatedly transmits the uplink data.

19. A terminal device, comprising a communications unit and a processing unit, wherein
the communications unit is configured to receive first indication information from a network device, wherein the first indication information is used to indicate to enable an uplink resource randomization rule corresponding to the terminal device, the uplink resource randomization rule is a specific rule of the terminal device, and the uplink resource randomization rule comprises a randomization rule of a demodulation reference signal DMRS sequence used by the terminal device;
the processing unit is configured to determine, based on the first indication information, a first uplink resource used to transmit uplink data; and
the communications unit is further configured to transmit the uplink data by using the first uplink resource.

20. The terminal device according to claim 19, wherein
the communications unit is further configured to receive second indication information from the network device, wherein the second indication information is used to indicate to disable the uplink resource randomization rule corresponding to the terminal device;
the processing unit is further configured to determine, based on the second indication information, a second uplink resource used to transmit uplink data; and
the communications unit is further configured to transmit the uplink data by using the second uplink resource.

21. The terminal device according to claim 19 or 20, wherein
the communications unit is further configured to receive first resource configuration information from the network device, wherein the first resource configuration information is used to indicate an uplink resource used by the terminal device after the terminal device enables the uplink resource randomization rule, and the first resource configuration information comprises at least one of information about a DMRS sequence used for uplink data demodulation, information about a time resource used for uplink data transmission, and information about a frequency resource used for uplink data transmission; and
the processing unit is specifically configured to determine, based on the first resource configuration information, the first uplink resource used to transmit the uplink data.

22. The terminal device according to claim 19 or 20, wherein
the communications unit is further configured to receive second resource configuration information from the network device, wherein the second resource configuration information comprises at least one of information about a DMRS sequence used for uplink data demodulation, information about a time resource used for uplink data transmission, and information about a frequency resource used for uplink data transmission; and
the processing unit is specifically configured to determine, based on the second resource configuration information and a preset randomization rule, the first uplink resource used to transmit the uplink data.

23. The terminal device according to claim 22, wherein the second resource configuration information is used to indicate an uplink resource used by the terminal device before the terminal device enables the uplink resource randomization rule and/or an uplink resource used by the terminal device after the terminal device disables the uplink resource randomization rule.

24. The terminal device according to claim 20, wherein
the communications unit is further configured to receive third resource configuration information from the network device, wherein the third resource configuration information is used to indicate an uplink resource used by the terminal device after the terminal device disables the uplink resource randomization rule, and the third resource configuration information comprises at least one of information about a DMRS sequence used for uplink data demodulation, information about a time resource used for uplink data transmission, and information about a frequency resource used for uplink data transmission; and
the processing unit is specifically configured to determine, based on the third resource configuration information, the second uplink resource used to transmit the uplink data.

25. The terminal device according to any one of claims 21 to 24, wherein the information about the DMRS sequence comprises at least one of the following: a DMRS base sequence, a comb pattern of the DMRS sequence, and a cyclic shift of the DMRS sequence.

26. The terminal device according to any one of claims 19 to 25, wherein randomization of the DMRS sequence comprises at least one of the following: randomization of the DMRS base sequence, randomization of the comb pattern of the DMRS sequence, and randomization of the cyclic shift of the DMRS sequence.

27. The terminal device according to any one of claims 19 to 26, wherein the uplink resource randomization rule is associated with an identifier of the terminal device, or the uplink resource randomization rule is associated with an identifier of the terminal device and a time unit in which the terminal device transmits the uplink data, or the uplink resource randomization rule is associated with an identifier of the terminal device and a quantity of times the terminal device repeatedly transmits the uplink data.

28. The terminal device according to any one of claims 19 to 27, wherein transmission of the uplink data is performed by the terminal device based on grant free scheduling; and the grant free scheduling is implemented based on a semi-persistent scheduling SPS mechanism, or is implemented based on higher layer signaling configuration, or is implemented based on both higher layer signaling configuration and a physical layer signaling indication.

29. A network device, comprising a processing unit and a communications unit, wherein
the processing unit is configured to generate first indication information, wherein the first indication information is used to indicate to enable an uplink resource randomization rule corresponding to a terminal device, the uplink resource randomization rule is a specific rule of the terminal device, and the uplink resource randomization rule comprises a randomization rule of a demodulation reference signal DMRS sequence used by the terminal device; and
the communications unit is configured to send the first indication information to the terminal device.

30. The network device according to claim 29, wherein
the processing unit is further configured to generate second indication information, wherein the second indication information is used to indicate to disable the uplink resource randomization rule corresponding to the terminal device; and
the communications unit is further configured to send the second indication information to the terminal device.

31. The network device according to claim 29 or 30, wherein
the communications unit is further configured to send first resource configuration information to the terminal device, wherein the first resource configuration information is used to indicate an uplink resource used by the terminal device after the terminal device enables the uplink resource randomization rule, and the first resource configuration information comprises at least one of information about a DMRS sequence used for uplink data demodulation, information about a time resource used for uplink data transmission, and information about a frequency resource used for uplink data transmission.

32. The network device according to claim 29 or 30, wherein
the communications unit is further configured to send second resource configuration information to the terminal device, wherein the second resource configuration information comprises at least one of information about a DMRS sequence used for uplink data demodulation, information about a time resource used for uplink data transmission, and information about a frequency resource used for uplink data transmission.

33. The network device according to any one of claims 29 to 32, wherein
the communications unit is further configured to send third resource configuration information to the terminal device, wherein the third resource configuration information is used to indicate an uplink resource used by the terminal device before the terminal device enables the uplink resource randomization rule and/or an uplink resource used by the terminal device after the terminal device disables the uplink resource randomization rule, and the third resource configuration information comprises at least one of the information about the DMRS sequence used for uplink data demodulation, the information about the time resource used for uplink data transmission, and the information about the frequency resource used for uplink data transmission.

34. The network device according to any one of claims 31 to 33, wherein the information about the DMRS sequence comprises at least one of the following: a DMRS base sequence, a comb pattern of the DMRS sequence, and a cyclic shift of the DMRS sequence.

35. The network device according to any one of claims 29 to 34, wherein randomization of the DMRS sequence comprises at least one of the following: randomization of the DMRS base sequence, randomization of the comb pattern of the DMRS sequence, and randomization of the cyclic shift of the DMRS sequence.

36. The network device according to any one of claims 29 to 35, wherein the uplink resource randomization rule is associated with an identifier of the terminal device, or the uplink resource randomization rule is associated with an identifier of the terminal device and a time unit in which the terminal device transmits the uplink data, or the uplink resource randomization rule is associated with an identifier of the terminal device and a quantity of times the terminal device repeatedly transmits the uplink data.
